# EUROPÄISCHE PATENTSCHRIFT

(11) **EP 3 895 297 B1**
(45) Veröffentlichungstag und Bekanntmachung des Hinweises auf die Patenterteilung: **11.10.2023**
(21) Anmeldenummer: 19813288.8
(22) Anmeldetag: 29.11.2019
(51) Int. Cl.: H02M 1/42, H02M 1/32, H02M 7/219, H02M 1/00, H02M 5/458

(54) **EINPHASENLEISTUNGSFAKTORKORREKTURSCHALTUNG MIT NETZFREQUENZKOMMUTIERTEM BRÜCKENZWEIG FÜR DEN NEUTRALLEITER**
SINGLEPHASE PFC CIRCUIT WITH LINE-FREQUENCY COMMUTATED BRIDGELEG FOR NEUTRAL CONDUCTOR
CIRCUIT CORRECTION DU FACTEUR DE PUISSANCE MONOPHASÉ AVEC DEMI-PONT COMMUTÉ À LA FRÉQUENCE DU RÉSEAU POUR CONDUCTEUR DE NEUTRE

(30) Priorität: 13.12.2018 DE 102018009736; 26.03.2019 DE 102019002137
(43) Veröffentlichungstag der Anmeldung: 20.10.2021
(73) Patentinhaber: Diehl AKO Stiftung & Co. KG, 88239 Wangen (DE)
(72) Erfinder: WEINMANN, Martin, 88339 Bad Waldsee (DE); BIHLER, Simon, 88239 Wangen (DE)
(74) Vertreter: Diehl Patentabteilung
(86) Internationale Anmeldenummer: PCT/EP2019/083034
(87) Internationale Veröffentlichungsnummer: WO 2020/120168

(56) Entgegenhaltungen:
- EP-A2- 2 515 420
- US-A1- 2013 077 365
- US-A1- 2015 180 330
- US-A1- 2015 318 780
- US-A1- 2017 170 753
- US-B1- 9 780 691

## Beschreibung

Die vorliegende Erfindung betrifft eine Antriebsschaltung zum Antreiben eines elektronisch kommutierten Motors und ein Verfahren zum Betreiben einer solchen Antriebsschaltung, insbesondere einer Antriebsschaltung mit einem 1NAC-Wechselstromanschluss.

Die vorliegende Erfindung betrifft insbesondere ein Verfahren und eine Schaltungsanordnung, um eine Antriebsschaltung mit Gleichspannungszwischenkreis so an das Wechselstromversorgungsnetz anzuschließen, dass im Fehlerfall kein Fehlerstrom in Form eines kontinuierlichen Gleichstroms auf Erde / Schutzleiterpotential abfließen kann.

Als Fehlerstrom wird ein elektrischer Strom bezeichnet, der aufgrund eines Isolationsfehlers über eine gegebene Fehlerstelle auf Erde bzw. den Schutzleiter abfließt. Zur Gefahrenabwehr bezüglich Personengefährdung durch elektrischen Schlag und Brandgefahr werden häufig sogenannte Fehlerstromschutzschalter, die auch als FI-Schutzschalter bezeichnet werden, eingesetzt. Gängiges Prinzip solcher Fehlerstromschutzschalter ist die Messung des Differenzstroms des in das zum Beispiel häusliche Stromnetz hinein- und herausfließenden Stroms, um bei Überschreitung eines bestimmten Grenzwerts des Differenzstroms die Stromversorgung allpolig abzuschalten.

Die Auswahl des FI-Schutzschalters hängt im Wesentlichen von der Stromform eines eventuell auftretenden Fehlerstroms ab. Je nach Art des Fehlerstroms, den sie erfassen können, gibt es dementsprechend unterschiedliche Typen von Fehlerstromschutzschaltern. Wie in der Beschreibungseinleitung der EP 3 059 828 A1 erläutert, werden bei Gebäudeinstallationen überwiegend FI-Schutzschalter des Typs A eingesetzt, die nur den Wechselstromanteil des Fehlerstroms messen können, und benötigen Antriebsschaltungen für elektronisch kommutierte Motoren insbesondere in Zusammenhang mit einer aktiven Leistungsfaktorkorrektur (PFC) - Regelung deutlich teurere FI-Schutzschalter des Typs B.

Aus der EP 3 059 828 A1 sind eine Vorrichtung und ein Verfahren zum Erfassen von Fehlerströmen in einem geregelten Gleichspannungszwischenkreis mit einer aktiven Leistungsfaktorkorrektur bekannt, bei denen im Fall einer Fehlerstromerkennung die Zwischenkreisspannung aktiv abgesenkt wird, sodass der Fehlerstrom auch von einem FI-Schutzschalter des Typs A erfasst werden kann. Die Fehlerstromerkennung erfolgt dabei durch eine Differenzstrommessung am Wechselstromeingang der Antriebsschaltung. Nachteilig an dieser Lösung ist, dass eine solche Differenzstrommessung mit einer erforderlichen Auflösung von wenigen mA sehr aufwändig, teuer und störanfällig ist.

US 2017/0170753 A1 offenbart ein System und ein Verfahren zum Antreiben eines dreiphasigen Elektromotors aus einer einphasigen Energiequelle unter Verwendung einer ASD-Schaltung, auf denen die Oberbegriffe der anhängenden unabhängigen Ansprüche basieren. Weitere Schaltungen mit einer Leistungsfaktorkorrekturschaltung zur Speisung eines Gleichspannungszwischenkreises, dessen beide Pole über die Leistungsfaktorkorrekturschaltung alterierend mit einem Neutralleiter des Versorgungsnetzes verbunden werden, sind zum Beispiel in US 2013/0077365 A1 und US 2015/0318780 A1 offenbart.

Aufgabe der Erfindung ist es, ein verbessertes Verfahren zum Betreiben einer Antriebsschaltung und eine verbesserte Antriebsschaltung zum Antreiben eines elektronisch kommutierten Motors zu schaffen, mit denen im Fehlerfall Fehlerströme verhindert werden können.

Diese Aufgabe wird gelöst durch die Lehre der unabhängigen Ansprüche. Besonders vorteilhafte Ausgestaltungen und Weiterbildungen der Erfindung sind Gegenstand der abhängigen Ansprüche.

Bei dem erfindungsgemäßen Verfahren zum Betreiben einer Antriebsschaltung zum Antreiben eines elektronisch kommutierten Motors, welche einen Gleichspannungszwischenkreis aufweist, der eingangsseitig über eine als Leistungsfaktorkorrekturschaltung ausgestaltete Gleichrichterschaltung mit einem Wechselstromanschluss verbunden ist, der an ein Versorgungsnetz anschließbar ist, wobei das Versorgungsnetz die Antriebsschaltung mit einer positiven Netzhalbwelle und einer negativen Netzhalbwelle speist, und ausgangsseitig über einen Wechselrichter mit mehrphasigen Brückenschaltungen mit einem Motorphasenanschluss verbunden ist, an den die Motorphasen des Motors anschließbar sind, wird ein kontinuierlicher Fehlergleichstrom auf Erde verhindert, indem die beiden Pole des Gleichspannungszwischenkreis je nach Phasenlage / Halbwelle des Wechselstromanschlusses alternierend auf den Neutralleiter des Versorgungsnetzes für den Wechselstromanschluss geklemmt werden.

Durch das alternierende Verbinden der beiden Pole des Gleichspannungszwischenkreises mit dem Neutralleiter des Versorgungsnetzes wechselt ein Fehlerstrom auf Grund einer Fehlstelle in der Motorisolation oder eines Isolationsfehlers auf der Ansteuerelektronik mit jeder Halbperiode des Versorgungsnetzes für den Wechselstromanschluss das Vorzeichen oder geht alternierend gegen Null. Das heißt es können bei einem Isolationsfehler nur Fehlerwechselströme mit der Grundwelle der Frequenz des Wechselspannungsnetzes entstehen. Solche Wechselströme beeinflussen nicht die Auslösecharakteristik der verbreiteten Fehlerstromschutzschalter Typs A, womit keine besonderen Installationsvorschriften bezüglich Verwendung von Fehlerstromschutzschaltern für Antriebsschaltungen gemäß der vorliegenden Erfindung mehr nötig sind. Da bei dieser Lösung im Fehlerfall gefährliche Fehlergleichströme erst gar nicht auftreten, ist eine Absenkung der Zwischenkreisspannung mit verbundener Leistungsreduzierung gar nicht notwendig und können die eingangs genannten Nachteile herkömmlicher Fehlerstromschutzmaßnahmen beseitigt werden.

Gemäß der Erfindung wird außerdem eine Polung der an den Wechselstromanschluss angeschlossenen Leiter des Versorgungsnetzes überprüft und werden dann eine Phasenleitung der Leistungsfaktorkorrekturschaltung mit dem mit dem Phasenleiter des Versorgungsnetzes verbundenen Pol des Wechselstromanschlusses und eine Neutralleitung der Leistungsfaktorkorrekturschaltung mit dem mit dem Neutralleiter des Versorgungsnetzes verbundenen Pol des Wechselstromanschlusses verbunden, wodurch verhindert werden kann, dass bei einem Vertauschen des Neutralleiters und des Phasenleiters des Versorgungsnetzes am Wechselstromanschluss der Antriebsschaltung die Pole des Gleichspannungszwischenkreises nicht mehr auf den Neutralleiter, sondern auf den Phasenleiter des Versorgungsnetzes geklemmt werden.

Außerdem entspricht gemäß der Erfindung die Frequenz zur alternierenden Verbindung der beiden Pole des Gleichspannungszwischenkreises mit dem Neutralleiter des Versorgungsnetzes der Netzfrequenz der Netzspannung des Versorgungsnetzes, wobei in der positiven Netzhalbwelle im Wesentlichen nur die unteren, d.h. die mit dem Minuspol des Gleichspannungszwischenkreises verbundenen Leistungsschalter der Leistungsfaktorkorrekturschaltung getaktet angesteuert werden und in der negativen Netzhalbwelle im Wesentlichen nur die oberen, d.h. die mit dem Pluspol des Gleichspannungszwischenkreises verbundenen Leistungsschalter der Leistungsfaktorkorrekturschaltung getaktet angesteuert werden.

Der Gleichspannungszwischenkreis weist vorzugsweise einen Zwischenkreiskondensator auf. Die Leistungsfaktorkorrekturschaltung ist ein Gleichrichter mit Leistungsfaktorkorrektur (PFC) zur Versorgung des Gleichspannungszwischenkreises aus dem Wechselstromanschluss und weist vorzugsweise eine oder mehrere Brückenschaltungen mit Leistungsschaltern wie IGBTs, SIC- oder GAN-Transistoren mit antiparallelen Dioden und/oder eine Diodenbrücke und/oder eine Brücke mit MOSFETs mit intrinsischen Body Dioden auf.

Der Wechselrichter zur Speisung des elektronisch kommutierten Motors weist vorzugsweise eine Wechselrichter-Brückenschaltung, bevorzugt mit mehreren Leistungsschaltern, wie IGBTs oder MOSFETs mit antiparallel geschalteten Dioden, auf. Der Wechselrichter ist entsprechend dem angeschlossenen Motor vorzugsweise mehrphasig ausgestaltet.

Die Erfindung ist auf keine spezielle Motorart beschränkt. Bei dem elektronisch kommutierten Motor kann es sich beispielsweise um einen Synchronmotor oder Asynchronmotor, einen Wechselstrommotor, einen Drehstrommotor oder dergleichen handeln.

In einer Ausführungsform der Erfindung werden die beiden Pole des Gleichspannungszwischenkreises mit dem Neutralleiter des Versorgungsnetzes über Gleichrichterdioden mit entsprechender Stromflussrichtung verbunden. Bei dieser Ausführungsform sind vorzugsweise parallel zu den Gleichrichterdioden Zusatzschalter geschaltet, welche alternierend geschlossen werden, um die Flussspannung der Verbindungsstelle zwischen dem Neutralleiter des Versorgungsnetzes und dem jeweiligen Pol des Gleichspannungszwischenkreises zu reduzieren. Vorzugsweise werden hierzu langsam schaltende MOSFETS mit intrinsischen Body Dioden verwendet. In diesem Fall können die externen Dioden auch entfallen und die intrinsischen Body Dioden übernehmen die Funktion der Gleichrichterdioden.

In einer alternativen Ausführungsform der Erfindung werden die beiden Pole des Gleichspannungszwischenkreises mit dem Neutralleiter des Versorgungsnetzes über Zusatzschalter verbunden, die alternierend geschlossen werden, um die Flussspannung der Verbindungsstelle zwischen dem Neutralleiter des Versorgungsnetzes und dem jeweiligen Pol des Gleichspannungszwischenkreises zu reduzieren.

In einer weiteren Ausführungsform der Erfindung weist der Gleichspannungszwischenkreis einen Zwischenkreiskondensator und wenigstens einen in Reihe zu dem Zwischenkreiskondensator geschalteten Überstromerkennungssensor auf. Bei dieser Ausgestaltung des Gleichspannungszwischenkreises können die Leistungsfaktorkorrekturschaltung und der Wechselrichter abgeschaltet werden, falls anhand eines durch den wenigstens einen Überstromerkennungssensor erkannten Überstroms auf ein Vorhandensein eines Kurzschlusses eines Schalters der Leistungsfaktorkorrekturschaltung und/oder eines Leistungsschalters des Wechselrichters geschlossen wird. Der Überstromerkennungssensor ist zum Beispiel ein Stromshunt.

Die Antriebsschaltung zum Antreiben eines elektronisch kommutierten Motors gemäß der Erfindung weist einen Gleichspannungszwischenkreis; einen mit dem Gleichspannungszwischenkreis verbundenen Wechselrichter mit mehrphasigen Brückenschaltungen zum Speisen des Motors; eine Leistungsfaktorkorrekturschaltung zur Speisung des Gleichspannungszwischenkreises mit sinusförmigen Strömen aus einem an ein Versorgungsnetz anschließbaren Wechselstromanschluss der Antriebsschaltung, wobei das Versorgungsnetz die Antriebsschaltung mit einer positiven Netzhalbwelle und einer negativen Netzhalbwelle speist; und eine Steuereinrichtung zum Ansteuern der Leistungsschalter des Wechselrichters und der Schalter der Leistungsfaktorkorrekturschaltung auf. Gemäß der Erfindung ist die Steuereinrichtung derart ausgestaltet, dass sie die Schalter der Leistungsfaktorkorrekturschaltung so ansteuert, dass die beiden Pole des Gleichspannungszwischenkreises über den Wechselstromanschluss alternierend mit einem Neutralleiter des Versorgungsnetzes verbunden werden. Gemäß der Erfindung weist die Antriebsschaltung ferner eine Umpolschaltung zwischen dem Wechselstromanschluss und der Leistungsfaktorkorrekturschaltung auf, welche Schalter zum wahlweisen Verbinden einer Phasenleitung und einer Neutralleitung der Leistungsfaktorkorrekturschaltung mit den beiden Polen des Wechselstromanschlusses enthält. Außerdem ist die Steuereinrichtung gemäß der Erfindung konfiguriert, um eine Polung der an den Wechselstromanschluss angeschlossenen Leiter des Versorgungsnetzes zu überprüfen und dann die Umpolschaltung so anzusteuern, dass die Phasenleitung der Leistungsfaktorkorrekturschaltung mit dem mit dem Phasenleiter des Versorgungsnetzes verbundenen Pol des Wechselstromanschlusses und die Neutralleitung der Leistungsfaktorkorrekturschaltung mit dem mit dem Neutralleiter des Versorgungsnetzes verbundenen Pol des Wechselstromanschlusses verbunden werden; und um die Schalter der Leistungsfaktorkorrekturschaltung so anzusteuern, dass die Frequenz zur alternierenden Verbindung der beiden Pole des Gleichspannungszwischenkreises mit dem Neutralleiter des Versorgungsnetzes der Netzfrequenz der Netzspannung des Versorgungsnetzes entspricht, wobei in der positiven Netzhalbwelle im Wesentlichen nur die mit dem Minuspol des Gleichspannungszwischenkreises verbundenen Leistungsschalter der Leistungsfaktorkorrekturschaltung getaktet werden und in der negativen Netzhalbwelle im Wesentlichen nur die mit dem Pluspol des Gleichspannungszwischenkreises verbundenen Leistungsschalter der Leistungsfaktorkorrekturschaltung getaktet werden.

Bezüglich der Vorteile, bevorzugten Ausführungsformen und Begriffserläuterungen zu der erfindungsgemäßen Antriebsschaltung wird ergänzend auf die obige Beschreibung in Zusammenhang mit dem erfindungsgemäßen Betriebsverfahren verwiesen.

In einer Ausgestaltung der Erfindung weist die Leistungsfaktorkorrekturschaltung Gleichrichterdioden auf, die einerseits mit einem der beiden Pole des Gleichspannungszwischenkreises und andererseits mit dem mit dem Phasenleiter des Versorgungsnetzes verbundenen Pol des Wechselstromanschlusses verbunden sind, und weisen die Schalter der Leistungsfaktorkorrekturschaltung parallel zu diesen Gleichrichterdioden geschaltete Leistungsschalter auf. Bei dieser Ausgestaltung ist die Steuereinrichtung vorzugsweise derart ausgestaltet, dass sie diese Leistungsschalter der Leistungsfaktorkorrekturschaltung schnell taktet, vorzugsweise mit einer Frequenz weit oberhalb der Netzfrequenz der Netzspannung des Versorgungsnetzes, vorzugsweise im Kilohertzbereich. Die Verbindung der Gleichrichterdioden mit dem mit dem Phasenleiter des Versorgungsnetzes verbundenen Pol des Wechselstromanschlusses ist vorzugsweise über eine Induktivität ausgeführt.

Die schnell getakteten Leistungsschalter der Leistungsfaktorkorrekturschaltung sind vorzugsweise schnell schaltende IGBTs, SIC- oder GAN-Transistoren. Die Gleichrichterdioden der Leistungsfaktorkorrekturschaltung sind bevorzugt schnell sperrende Gleichrichterdioden, vorzugsweise diskrete Silizium- oder Siliziumcarbid-Halbleiter.

In einer Ausgestaltung der Erfindung weist die Leistungsfaktorkorrekturschaltung Zusatzschalter, weitere Gleichrichterdioden oder Parallelschaltungen aus Zusatzschaltern und weiteren Gleichrichterdioden auf, die einerseits mit einem der beiden Pole des Gleichspannungszwischenkreises und andererseits mit dem mit dem Neutralleiter des Versorgungsnetzes verbundenen Pol des Wechselstromanschlusses verbunden sind. Bei dieser Ausgestaltung ist die Steuereinrichtung vorzugsweise derart ausgestaltet, dass sie diese Zusatzschalter der Leistungsfaktorkorrekturschaltung langsam taktet, vorzugsweise mit jeder Halbwelle der Netzspannung des Versorgungsnetzes. Diese Zusatzschalter der Leistungsfaktorkorrekturschaltung sind vorzugsweise MOSFETs und diese weiteren Gleichrichterdioden der Leistungsfaktorkorrekturschaltung sind vorzugsweise intrinsische Body Dioden der MOSFETs.

In einer weiteren Ausgestaltung der Erfindung weist der Gleichspannungszwischenkreis einen Zwischenkreiskondensator und wenigstens einen in Reihe zu dem Zwischenkreiskondensator geschalteten Überstromerkennungssensor wie beispielsweise einen Stromshunt auf. Bei dieser Ausgestaltung ist die Steuereinrichtung vorzugsweise derart ausgestaltet, dass sie die Leistungsfaktorkorrekturschaltung und den Wechselrichter abschaltet, falls anhand des Ansprechens des wenigstens einen Überstromerkennungssensors ein Überstrom im Gleichspannungszwischenkreis erkannt wird und daraus auf ein Vorhandensein eines Kurzschlusses eines Schalters der Leistungsfaktorkorrekturschaltung und/oder eines Leistungsschalters des Wechselrichters geschlossen wird.

Obige sowie weitere Merkmale und Vorteile der Erfindung werden aus der nachfolgenden Beschreibung bevorzugter, nicht-einschränkender Ausführungsbeispiele anhand der beiliegenden Zeichnung besser verständlich. Darin zeigen, zum Teil schematisch:
- Fig. 1: ein erstes, nicht in den Schutzumfang der Ansprüche fallendes Beispiel einer Antriebsschaltung mit einer Leistungsfaktorkorrekturschaltung in "Totem Pole Gleichrichter" - Topologie;
- Fig. 2: Diagramme zur Veranschaulichung des zeitlichen Verlaufs eines Fehlerstroms bei einem Isolationsfehler an einem Pluspol des Gleichspannungszwischenkreises der Antriebsschaltung von Fig. 1;
- Fig. 3: Diagramme zur Veranschaulichung des zeitlichen Verlaufs eines Fehlerstroms bei einem Isolationsfehler an einem Minuspol des Gleichspannungszwischenkreises der Antriebsschaltung von Fig. 1;
- Fig. 4: Diagramme zur Veranschaulichung des zeitlichen Verlaufs eines Fehlerstroms bei einem Isolationsfehler an einer Motorphase der Antriebsschaltung von Fig. 1;
- Fig. 5: Diagramme zur Veranschaulichung des zeitlichen Verlaufs eines Fehlerstroms bei einem Isolationsfehler an einem Sternpunkt des elektronisch kommutierten Motors bei der Antriebsschaltung von Fig. 1;
- Fig. 6: Diagramme zur Veranschaulichung des zeitlichen Verlaufs eines Fehlerstroms bei einem Isolationsfehler einer Motorphase der Antriebsschaltung von Fig. 1 bei einer mehrfach kleineren elektrischen Frequenz des Motorstroms bezogen auf die Frequenz des Versorgungsnetzes;
- Fig. 7: eine Variante der Antriebsschaltung von Fig. 1 mit Zusatzschaltern parallel zu den weiteren Gleichrichterdioden der Leistungsfaktorkorrekturschaltung;
- Fig. 8: ein zweites, nicht in den Schutzumfang der Ansprüche fallendes Beispiel einer Antriebsschaltung mit einer Leistungsfaktorkorrekturschaltung in "Interleaved Totem Pole Gleichrichter" - Topologie;
- Fig. 9: ein drittes, nicht in den Schutzumfang der Ansprüche fallendes Beispiel einer Antriebsschaltung mit einer Leistungsfaktorkorrekturschaltung in "Interleaved Totem Pole Gleichrichter (3-, 4-fach)"-Topologie;
- Fig. 10: ein viertes, nicht in den Schutzumfang der Ansprüche fallendes Beispiel einer Antriebsschaltung mit einer Leistungsfaktorkorrekturschaltung in "Pseudo Totem Pole Gleichrichter" - Topologie;
- Fig. 11A: Diagramme zur Veranschaulichung des zeitlichen Verlaufs der Ansteuersignale für die schnell getakteten PFC-Leistungsschalter der Leistungsfaktorkorrekturschaltung der Antriebsschaltung von Fig. 7;
- Fig. 11B: Diagramme zur Veranschaulichung des zeitlichen Verlaufs der Ansteuersignale für die langsam getakteten Zusatzschalter der Leistungsfaktorkorrekturschaltung der Antriebsschaltung von Fig. 7;
- Fig. 12: Diagramme zur Veranschaulichung des Stromflusses im Eingangsstromkreis der Antriebsschaltung von Fig. 7 bei positiver Halbwelle des Versorgungsnetzes;
- Fig. 13: Diagramme zur Veranschaulichung des Stromflusses im Eingangsstromkreis der Antriebsschaltung von Fig. 7 bei negativer Halbwelle des Versorgungsnetzes;
- Fig. 14: ein erfindungsgemäßes Ausführungsbeispiel der Antriebsschaltung von Fig. 1 mit zusätzlicher Umpolschaltung; und
- Fig. 15: eine Variante der Antriebsschaltung von Fig. 1 mit zusätzlicher Kurzschlusserkennung.

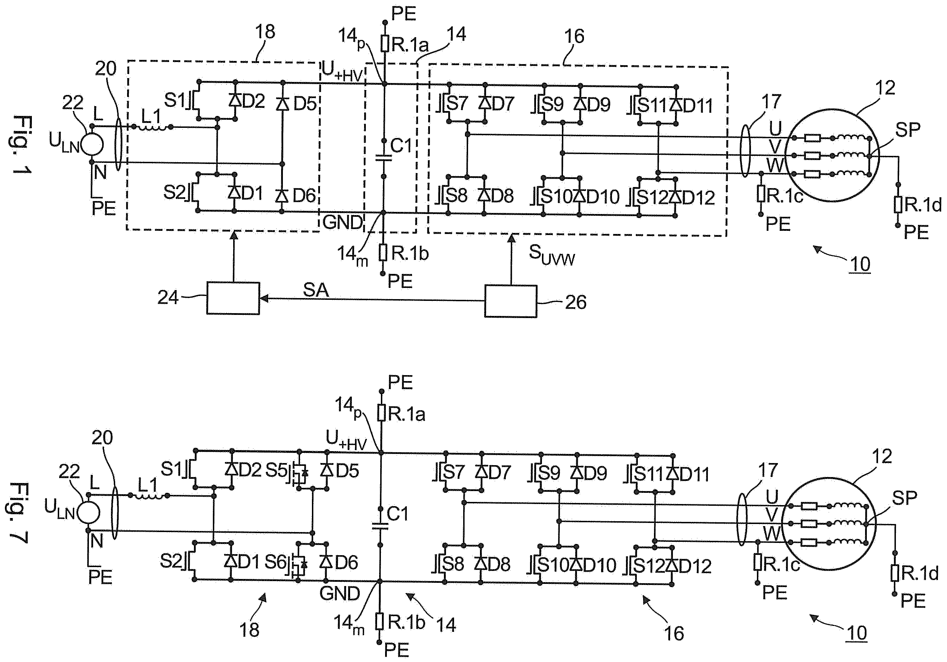

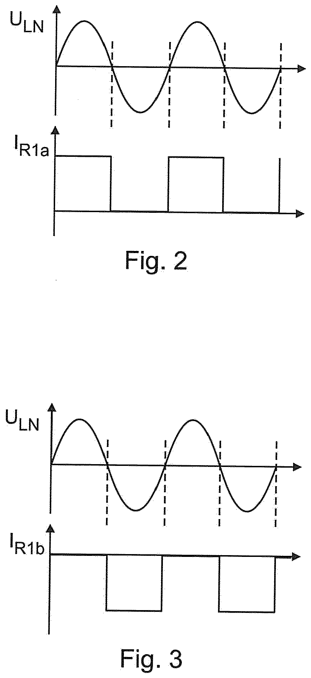

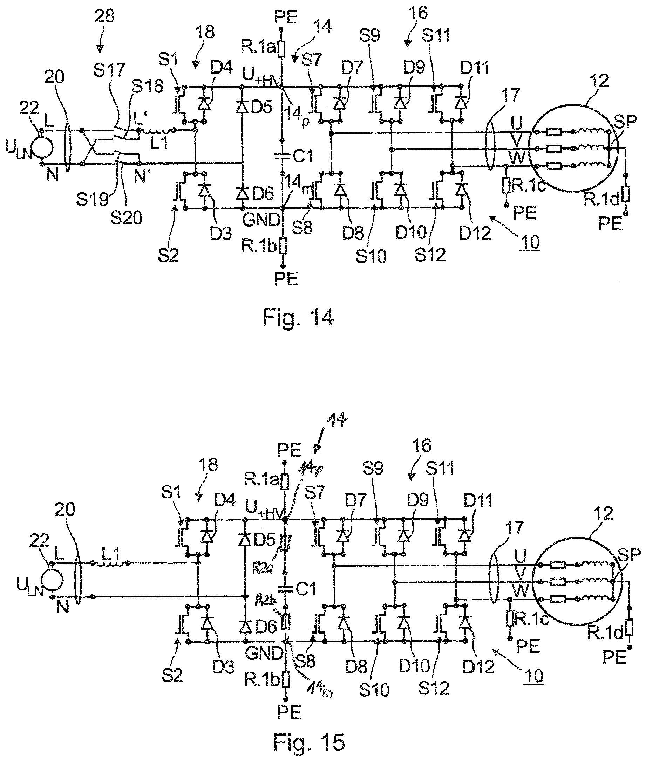

Fig. 1, 7, 8, 9, 10 und 15 veranschaulichen verschiedene Beispiele von Antriebsschaltungen, bei denen die erfindungsgemäßen Maßnahmen angewendet werden können, die in den unabhängigen Ansprüchen definiert und anhand der Figur 14 in Kombination mit den Figuren 2-6 sowie 11-13 erläutert werden.

Bezugnehmend auf Fig. 1 bis 6 werden zunächst ein erstes, nicht in den Schutzumfang der Ansprüche fallendes Beispiel einer Antriebsschaltung für einen elektronisch kommutierten Motor und dessen mögliche Fehlerströme näher erläutert.

Die Antriebsschaltung 10 dient dem Antreiben eines elektronischen kommutierten Motors 12. Im Ausführungsbeispiel von Fig. 1 handelt es sich um einen dreiphasigen elektronisch kommutierten Motors 12 mit drei Motorphasen U, V, W, die an einem Sternpunkt SP miteinander verbunden sind. Der Motor 12 wird aus einem Gleichspannungszwischenkreis 14 über einen Wechselrichter 16 gespeist. Der Gleichspannungszwischenkreis 14 weist einen Zwischenkreiskondensator C1 auf, und der Wechselrichter 16 weist eine in diesem Ausführungsbeispiel dreiphasige Wechselrichter-Brückenschaltung mit insgesamt sechs Leistungsschaltern S7 bis S12 (z.B. IGBTs mit antiparallel geschalteten Dioden) in seinen Halbbrücken auf. Die drei Motorphasen U, V, W sind an einen Motorphasenanschluss 17 angeschlossen, der mit den drei Mittelabgriffen der Halbbrücken des Wechselrichters 16 verbunden ist.

Eingangsseitig ist der Gleichspannungszwischenkreis 14 über eine Leistungsfaktorkorrektur (PFC) - Schaltung 18 mit dem Wechselstromanschluss 20 verbunden. Die PFC-Schaltung 18 kann auch als PFC-Filter bezeichnet werden. Die PFC-Schaltung 18 ist in diesem Ausführungsbeispiel in einer Bridgeless Totem Pole Topologie ausgestaltet und enthält insbesondere eine Induktivität L1, zwei schnelle PFC-Leistungsschalter S1/S2 (z.B. IGBTs) mit zwei antiparallelen schnellen Gleichrichterdioden D1/D2 (z.B. diskrete Silizium- oder Siliziumcarbid-Halbleiter) und zwei weitere Gleichrichterdioden D5/D6. Die Leistungsschalter S1/S2 werden von einer Treiberschaltung 24 angesteuert.

Die Antriebsschaltung 10 hat ferner eine Steuereinrichtung 26. Die Steuereinrichtung (z.B. ein Mikrocontroller) 26 steuert die Leistungsschalter S7 bis S12 des Wechselrichters 16 über Steuersignale Suvw an. Außerdem steuert die Steuereinrichtung 26 die Treiberschaltung 24 für die Leistungsschalter S1, S2 der PFC-Schaltung 18 über Steuersignale SA an.

Über den Wechselstromanschluss 20 ist die Antriebsschaltung 10 mit einem Phasenleiter L und einem Neutralleiter N eines Versorgungsnetzes 22 verbunden. Das Versorgungsnetz hat zudem eine Schutzerdung PE. Der Wechselstromanschluss 20 ist zum Beispiel ein 1NAC Wechselstromanschluss.

Die Phasenleitung L' der PFC-Schaltung 18 ist über den Wechselstromanschluss 20 mit dem Phasenleiter L des Versorgungsnetzes 22 verbunden, und die Neutralleitung N` der PFC-Schaltung 18 ist über den Wechselstromanschluss 20 mit dem Neutralleiter N des Versorgungsnetzes 22 verbunden. Die Induktivität L1 der PFC-Schaltung 18 ist in deren Phasenleitung L' angeordnet. Die zwei schnellen PFC-Leistungsschalter S1-S2 mit ihren zwei antiparallelen schnellen Gleichrichterdioden D1-D2 sind einerseits über die Phasenleitung L' mit dem Phasenleiter L und andererseits mit einem der beiden Pole 14p, 14m des Gleichspannungszwischenkreises 14 verbunden, und die zwei weiteren Gleichrichterdioden D5-D6 sind einerseits über die Neutralleitung N` mit dem Neutralleiter N und andererseits mit einem der beiden Pole 14p, 14m des Gleichspannungszwischenkreises 14 verbunden.

Zwischen das Versorgungsnetz 22 und den Wechselstromanschluss 20 der Antriebsschaltung 10 kann zudem optional ein Schutzschalter geschaltet werden, der die Antriebsschaltung 10 bei Bedarf vom Versorgungsnetz 22 trennen kann. Bei dem Schutzschalter handelt es sich beispielsweise um einen FI-Schalter des Typs A.

Bei der in Fig. 1 veranschaulichten Antriebsschaltung 10 mit aktiver Leistungsfaktorkorrektur (PFC) gibt es verschiedene Arten von Isolationsfehlern. Um einen FI-Schalter des Typs A verwenden zu können, der diese Isolationsfehler sicher erkennt, dürfen diese Isolationsfehler keinen kontinuierlichen Gleichstromanteil auf Schutzerde (PE) bewirken. Bei den weit verbreiteten aktiven Leistungsfaktorkorrekturschaltungen mit Hochsetzsteller Topologie (Boost PFC) oder brückenloser Leistungsfaktorkorrektur (Bridgeless PFC) kann jedoch bei einem Isolationsfehler im Gleichspannungszwischenkreis nicht sichergestellt werden, dass ein Isolationsfehler keinen solchen gefährlichen kontinuierlichen Gleichstromanteil auf Schutzerde (PE) bewirkt.

Mögliche Isolationsfehler betreffen Isolationsfehler am Pluspol 14p des Gleichspannungszwischenkreises 14 (in Fig. 1 beispielhaft als Isolationsfehler mit dem Widerstand R1a dargestellt), Isolationsfehler am Minuspol 14m des Gleichspannungszwischenkreises 14 (in Fig. 1 beispielhaft als Isolationsfehler mit dem Widerstand R1b dargestellt), Isolationsfehler der Motorphasen U, V, W(in Fig. 1 beispielhaft für eine Motorphase als Isolationsfehler mit dem Widerstand R1c dargestellt) sowie Isolationsfehler in der Nähe des Sternpunkts SP des elektronisch kommutierten Motors 12 (in Fig. 1 beispielhaft als Isolationsfehler mit dem Widerstand R1d dargestellt).

Bei der in Fig. 1 veranschaulichten Antriebsschaltung 10 mit aktiver Leistungsfaktorkorrektur (PFC) können gemäß der vorliegenden Erfindung kontinuierliche Gleichstromanteile auf Schutzerde (PE) bei Isolationsfehlern ausgeschlossen werden.

Fig. 7 zeigt eine Variante des ersten Ausführungsbeispiels. Bei dieser Antriebsschaltung 10 sind in der PFC-Schaltung 18 zwei Zusatzschalter S5, S6 parallel zu den weiteren Gleichrichterdioden D5, D6 geschaltet. Diese Zusatzschalter S5, S6 sind prinzipiell für die Funktionsweise der Antriebsschaltung nicht nötig, können aber einen höheren Wirkungsgrad erzielen. Während die schnellen PFC-Leistungsschalter S1, S2 von der Steuereinrichtung 26 über die Treiberschaltung 24 schnell getaktet werden, beispielsweise mit Frequenzen zwischen 10kHz und 100kHz, werden die Zusatzschalter S5, S6 von der Steuereinrichtung 26 langsam getaktet, mit jeder Halbwelle der Netzspannung U_{LN} des Versorgungsnetzes 22. Während in Fig. 7 Parallelschaltungen aus Zusatzschaltern S5, S6 und weiteren Gleichrichterdioden D5, D6 veranschaulicht sind, können diese Parallelschaltungen in der Praxis beispielsweise durch Schalter mit inhärenten Dioden, vorzugsweise durch MOSFETs mit intrinsischen Body Dioden realisiert sein. Alternativ sind auch Schaltungen allein mit Zusatzschaltern ohne Dioden möglich. Im Übrigen entspricht die Variante von Fig. 7 dem ersten Beispiel von Fig. 1.

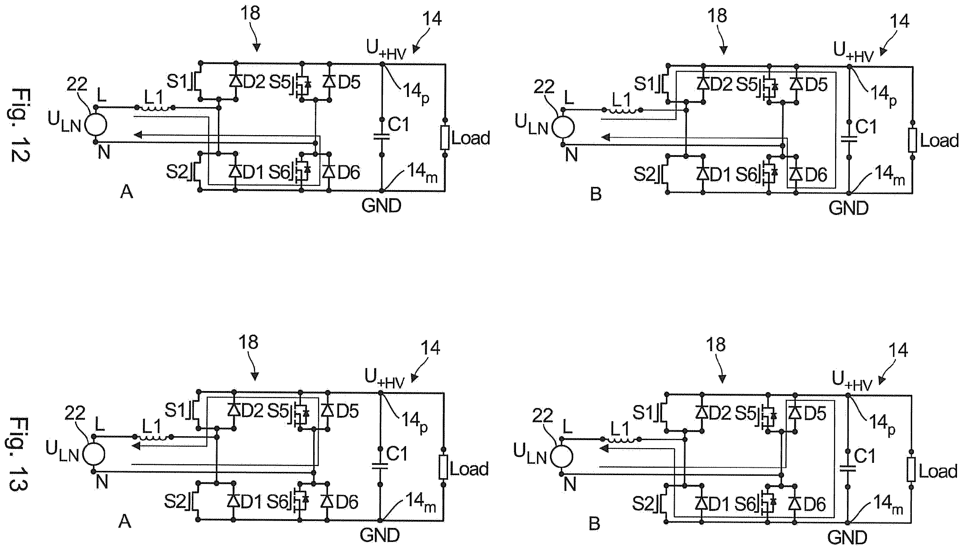

Anhand der Fig. 12 und 13 wird nun die erfindungsgemäße Funktionsweise dieser Leistungsfaktorkorrekturschaltung 18 gemäß Fig. 1 bzw. Fig. 7 beschrieben.

Fig. 12 zeigt den Stromfluss während der positiven Halbwelle der Netzspannung U_{LN}. In dieser Zeit ist die weitere Diode D6, solange ein Stromfluss besteht, leitend bzw. der Zusatzschalter S6 durchgängig eingeschaltet. Fig. 12A zeigt den Zustand während des Stromanstiegs in der Induktivität L1. Dabei wird der schnelle PFC-Leistungsschalter S2 eingeschaltet und der Stromfluss erfolgt über den Leistungsschalter S2 und die weitere Diode D6 bzw. den Zusatzschalter S6. Fig. 12B zeigt den Zustand während des Stromabfalls in der Induktivität L1. Dabei wird der PFC-Leistungsschalter S2 ausgeschaltet und der Strom in der Induktivität L1 kommutiert auf die schnelle Gleichrichterdiode D2. Der Stromfluss erfolgt über die schnelle Gleichrichterdiode D2 und weiterhin über die weitere Diode D6 bzw. den Zusatzschalter S6. Der Zwischenkreiskondensator C1 des Gleichspannungszwischenkreises 14 wird in diesem Zustand geladen.

Fig. 13 zeigt den Stromfluss während der negativen Halbwelle der Netzspannung U_{LN}. In dieser Zeit ist die weitere Diode D5, solange ein Stromfluss besteht, leitend bzw. der Zusatzschalter S5 durchgängig eingeschaltet. Fig. 13A zeigt den Zustand während des Stromanstiegs in der Induktivität L1. Dabei wird der schnelle PFC-Leistungsschalter S1 eingeschaltet und der Stromfluss erfolgt über den Leistungsschalter S1 und die weitere Diode D5 bzw. den Zusatzschalter S5. Fig. 13B zeigt den Zustand während des Stromabfalls in der Induktivität L1. Dabei wird der schnelle PFC-Leistungsschalter S1 ausgeschaltet und der Strom in der Induktivität L1 kommutiert auf die schnelle Gleichrichterdiode D1. Der Stromfluss erfolgt über die schnelle Gleichrichterdiode D1 und weiterhin über die weitere Diode D5 bzw. den Zusatzschalter S5. Der Zwischenkreiskondensator C1 des Gleichspannungszwischenkreises 14 wird in diesem Zustand geladen.

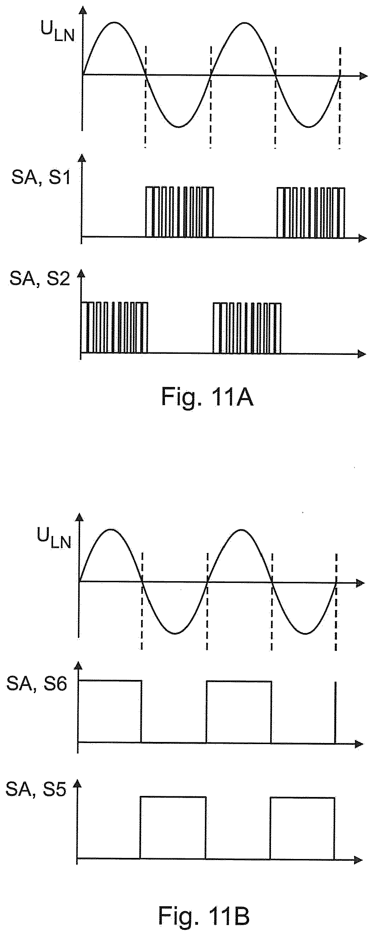

Fig. 11A zeigt die Steuersignale SA für die schnellen PFC-Leistungsschalter S1, S2 aus Fig. 1 oder 7. Bei den PFC-Leistungsschaltern handelt es sich um schnelle Schalter wie IGBTs ohne intrinsische Freilaufdiode. Als Freilaufdioden oder schnelle Gleichrichterdioden sind parallel zu den schnellen PFC-Leistungsschaltern separate Dioden D1, D2 wie schnelle Silizium-Halbleiter geschaltet. In der positiven Netzhalbwelle des Versorgungsnetzes 22 wird nur der PFC-Leistungsschalter S2 mit einer hochfrequenten Pulsweitenmodulation (z.B. zwischen 10kHz und 100kHz) angesteuert. Die Pulsweiten werden der Phasenlage der Netzspannung angepasst und auf einen sinusförmigen Netzstrom in Phase mit der Netzspannung geregelt. In der negativen Netzhalbwelle des Versorgungsnetzes 22 wird in gleicher Weise nur der PFC-Leistungsschalter S1 angesteuert

Fig. 11B zeigt die Steuersignale SA für die Zusatzschalter S5 und S6 bei der Variante von Fig. 7, 12 und 13, in welcher diese parallel zu den weiteren Gleichrichterdioden D5 und D6 zum Einsatz kommen. Während der positiven Halbwelle der Netzspannung U_{LN} wird der Zusatzschalter S6 dauerhaft eingeschaltet und während der negativen Halbwelle der Netzspannung U_{LN} wird der Zusatzschalter S5 dauerhaft eingeschaltet. Dadurch werden die beiden Pole 14m, 14p des Gleichspannungszwischenkreises 14 auch ohne Stromfluss über die weiteren Gleichrichterdioden D5 und D6 auf den Neutralleiter N des Versorgungsnetzes 22 geklemmt.

Durch dieses Ansteuerverfahren bzw. mit dieser Topologie werden die beiden Pole 14m und 14p des Gleichspannungszwischenkreis 14 mit jeder Netzhalbwelle des Versorgungsnetzes 22 alternierend mit dem Neutralleiter N des Versorgungsnetzes 22 verbunden. In der positiven Halbwelle der Netzspannung U_{LN} wird der Minuspol 14m bzw. die Masseverbindung GND des Gleichspannungszwischenkreises 14 auf den Neutralleiter N des Versorgungsnetzes 22 geklemmt, in der negativen Halbwelle der Netzspannung U_{LN} wird der Pluspol 14p bzw. die Zwischenkreisspannung U_{+HV} des Gleichspannungszwischenkreises 14 auf den Neutralleiter N des Versorgungsnetzes geklemmt. Dadurch wird bei einem Isolationsfehler, welcher Bezug zu einem der beiden Polen des Gleichspannungszwischenkreises hat, erzwungen, dass dieser zu Null geht und sich somit kein kontinuierlich Gleichstromanteil ausbilden kann.

Der Kurvenverlauf für den Fall eines Isolationsfehlers R1a am Pluspol 14p des Gleichspannungszwischenkreises 14 ist in Fig. 2 veranschaulicht. Während der positiven Halbwelle der Netzspannung U_{LN} ist der Strom des Isolationsfehlers I_{R1a} positiv mit U_{+HV}/R1a. Während der negativen Halbwelle der Netzspannung U_{LN} ist dieser Strom des Isolationsfehlers I_{R1a} Null.

Der Kurvenverlauf für den Fall eines Isolationsfehlers R1b am Minuspol 14m des Gleichspannungszwischenkreises 14 ist in Fig. 3 veranschaulicht. Während der positiven Halbwelle der Netzspannung U_{LN} ist der Strom des Isolationsfehlers I_{R1b} negativ mit U_{+HV}/R1b. Während der positiven Halbwelle der Netzspannung U_{LN} ist dieser Strom des Isolationsfehlers I_{R1b} Null.

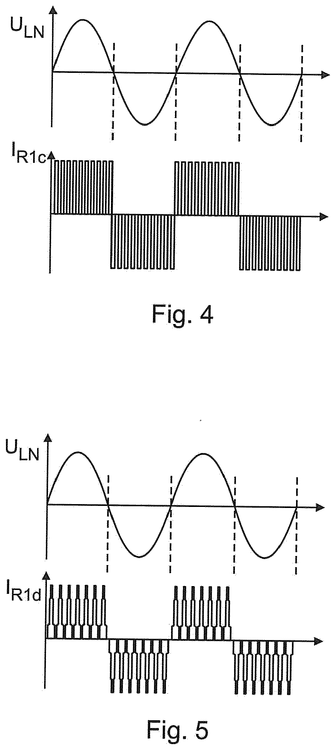

Der Kurvenverlauf für den Fall eines Isolationsfehlers R1c an einer Motophase U, V, W ist in Fig. 4 beispielhaft für eine Motorphase veranschaulicht. Während der positiven Halbwelle der Netzspannung U_{LN} ist der Strom des Isolationsfehlers I_{R1c} mit der Taktfrequenz der Leistungsschalter S7-S12 des Wechselrichters 16 zur Motoansteuerung wechselnd positiv mit U_{+HV}/R1c und Null. Während der negativen Halbwelle der Netzspannung U_{LN} ist dieser Strom des Isolationsfehlers I_{R1c} mit der Taktfrequenz der Leistungsschalter S7-S12 des Wechselrichters 16 wechselnd negativ mit U_{+HV}/R1b und Null.

Der Kurvenverlauf für den Fall eines Isolationsfehlers R1d am Sternpunkt SP des Motors 12 ist in Fig. 5 veranschaulicht. Während der positiven Halbwelle der Netzspannung U_{LN} ist der Strom des Isolationsfehlers I_{R1d} mit der Taktfrequenz der Leistungsschalter S7-S12 des Wechselrichters 16 zur Motoansteuerung wechselnd positiv mit U_{+HV}/R1d, 1/3×U_{+HV}/R1d, 2/3×U_{+HV}/R1d und Null. Während der negativen Halbwelle der Netzspannung U_{LN} ist der Strom des Isolationsfehlers I_{R1d} mit der Taktfrequenz der Leistungsschalter S7-S12 des Wechselrichters 16 wechselnd negativ mit U_{+HV}/R1d, 1/3×U_{+HV}/R1d, 2/3×U_{+HV}/R.1d und Null.

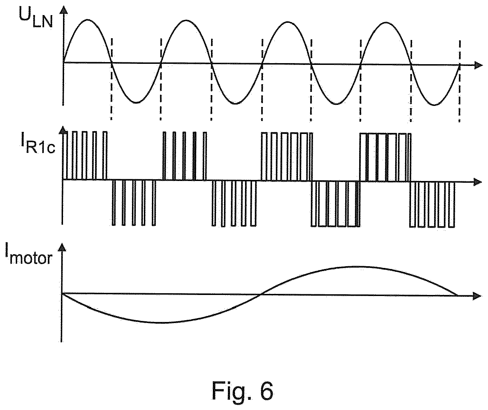

Fig. 6 veranschaulicht die Pulsweitenmodulation bei einer Motordrehfeldfrequenz des Motorstroms Iₘₒₜₒᵣ, die um Faktor 4 geringer ist als die Frequenz der Netzspannung U_{LN} des Versorgungsnetzes 22. Der Kurvenverlauf zeigt, dass der Wechsel zwischen positivem Strom des Isolationsfehlers I_{R1c} und Null bzw. negativem Strom des Isolationsfehlers I_{R1c} und Null unabhängig der Motordrehfeldfrequenz des Motorstroms Iₘₒₜₒᵣ ist und immer mit der halben Periode der Netzspannung U_{LN} erfolgt. Der Kurvenverlauf von Fig. 6 zeigt dieses Verhalten exemplarisch für einen Isolationsfehler I_{R1c} an einer Motorphase U, V, W. Ein Isolationsfehler R1d am Sternpunkt SP des Motors 12 zeigt ebenfalls das gleiche Verhalten.

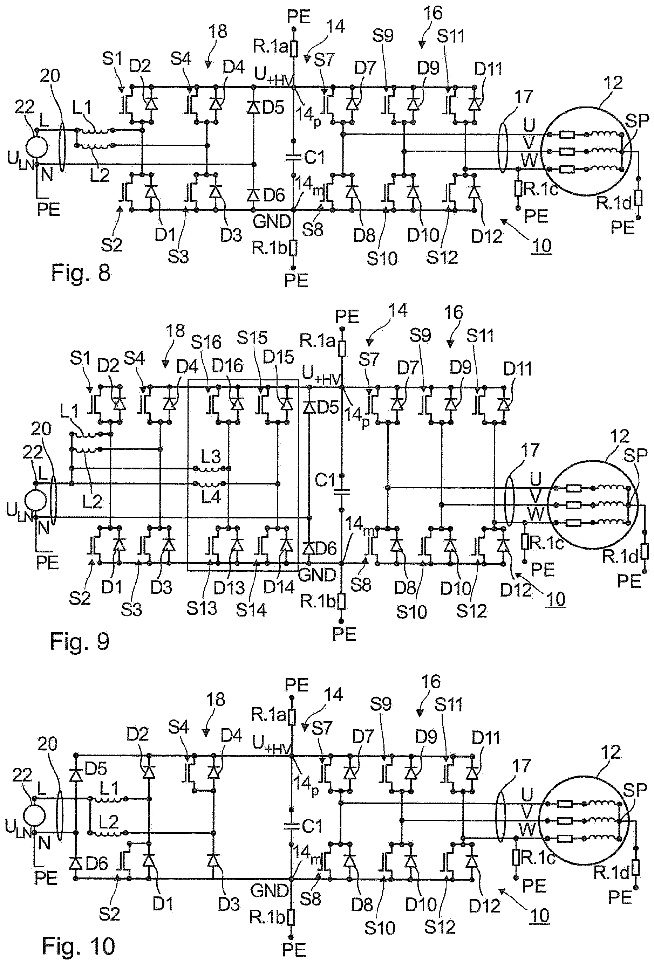

Fig. 8 zeigt ein zweites, nicht in den Schutzumfang fallendes Beispiel einer Antriebsschaltung 10. Die Antriebsschaltung des zweiten Ausführungsbeispiels unterscheidet sich von dem ersten Beispiel insbesondere durch die Topologie der PFC-Schaltung 18.

Im Beispiel von Fig. 8 ist die PFC-Schaltung 18 in der Topologie eines "Interleaved Totem Pole Gleichrichters" ausgestaltet. Im Vergleich zur Antriebsschaltung 10 von Fig. 1 enthält die PFC-Schaltung 18 der Antriebsschaltung von Fig. 8 vier schnelle Gleichrichterdioden D1 bis D4 mit diesen parallel geschalteten schnellen PFC-Leistungsschaltern S1 bis S4. Die beiden Parallelschaltungen S1, D2 und S2, D1 sind einerseits über eine erste Induktivität L1 mit dem Phasenleiter L des Versorgungsnetzes 22 und andererseits mit einem der Pole 14p, 14m des Gleichspannungszwischenkreises 14 verbunden. Die beiden anderen Parallelschaltungen S3, D3 und S4, D4 sind einerseits über eine zweite Induktivität L2 mit dem Phasenleiter L des Versorgungsnetzes 22 und andererseits mit einem der Pole 14p, 14m des Gleichspannungszwischenkreises 14 verbunden. Die beiden weiteren Gleichrichterdioden D5, D6 sind wie im ersten Ausführungsbeispiel von Fig. 1 einerseits mit dem Neutralleiter N des Versorgungsnetzes 22 und andererseits mit einem der Pole 14p, 14m des Gleichspannungszwischenkreises 14 verbunden. Optional können analog zur Ausführungsvariante von Fig. 7 den weiteren Gleichrichterdioden D5, D6 Zusatzschalter S5, S6 parallelgeschaltet sein. Falls die Zusatzschalter S5 und S6 intrinsische Body Dioden haben, wie zum Beispiel im Fall von MOSFETs, können sie auch alternativ zu den Dioden D5, D6 eingesetzt sein.

Im Übrigen entsprechen Aufbau und Funktionsweise der Antriebsschaltung 10 von Fig. 8 jenen der Antriebsschaltung von Fig. 1 bzw. Fig. 7.

Fig. 9 zeigt ein drittes, nicht in den Schutzumfang fallendes Beispiel einer Antriebsschaltung 10. Die Antriebsschaltung des dritten Beispiels unterscheidet sich von dem ersten und dem zweiten Beispiel insbesondere durch die Topologie der PFC-Schaltung 18.

Im Beispiel von Fig. 9 ist die PFC-Schaltung 18 ähnlich dem Ausführungsbeispiel von Fig. 8 in der Topologie eines "Interleaved Totem Pole Gleichrichters" ausgestaltet. D.h. im Vergleich zur Antriebsschaltung 10 von Fig. 1 enthält die PFC-Schaltung 18 der Antriebsschaltung von Fig. 9 vier schnelle Gleichrichterdioden D1 bis D4 mit diesen parallel geschalteten schnellen PFC-Leistungsschaltern S1 bis S4 und zwei Induktivitäten L1, L2. Im Vergleich zur Antriebsschaltung 10 von Fig. 8 enthält die PFC-Schaltung 18 der Antriebsschaltung 10 von Fig. 9 zusätzlich zwei oder vier schnelle Gleichrichterdioden D13 bis D16 mit diesen parallel geschalteten weiteren schnellen PFC-Leistungsschaltern S13 bis S16 und ein bzw. zwei weitere Induktivitäten L3, L4, um eine 3-fach bzw. 4-fach Interleaved Totem Pole - Topologie zu bilden. Die beiden Parallelschaltungen S16, D16 und S13, D13 sind einerseits über die dritte Induktivität L3 mit dem Phasenleiter L des Versorgungsnetzes 22 und andererseits mit einem der Pole 14p, 14m des Gleichspannungszwischenkreises 14 verbunden. Die beiden Parallelschaltungen S15, D15 und S14, D14 sind einerseits über die vierte Induktivität L4 mit dem Phasenleiter L des Versorgungsnetzes 22 und andererseits mit einem der Pole 14p, 14m des Gleichspannungszwischenkreises 14 verbunden. Optional können analog zur Variante von Fig. 7 den weiteren Gleichrichterdioden D5, D6 Zusatzschalter S5, S6 parallelgeschaltet sein. Falls die Zusatzschalter S5 und S6 intrinsische Body Dioden haben, wie etwa bei MOSFETs, können sie auch alternativ zu den weiteren Gleichrichterdioden D5, D6 eingesetzt sein.

Im Übrigen entsprechen Aufbau und Funktionsweise der Antriebsschaltung 10 von Fig. 9 jenen der Antriebsschaltung 10 von Fig. 1, 7 bzw. 8.

Fig. 10 zeigt ein viertes, nicht in den Schutzumfang fallendes Beispiel einer Antriebsschaltung 10. Die Antriebsschaltung des vierten Beispiels unterscheidet sich von dem zweiten Beispiel insbesondere durch die Topologie der PFC-Schaltung 18.

Im Beispiel von Fig. 10 ist die PFC-Schaltung 18 in der Topologie eines "Pseudo Totem Pole Gleichrichters" ausgestaltet. D.h. im Vergleich zur Antriebsschaltung 10 von Fig. 8 enthält die PFC-Schaltung 18 der Antriebsschaltung von Fig. 10 ebenfalls vier Gleichrichterdioden D1 bis D4, sind diesen aber nur zum Teil schnelle PFC-Leistungsschalter S2, S4 parallelgeschaltet. Die Parallelschaltung S2, D1 und die Gleichrichterdiode D2 sind einerseits über die erste Induktivität L1 mit dem Phasenleiter L des Versorgungsnetzes 22 und andererseits mit einem der Pole 14p, 14m des Gleichspannungszwischenkreises 14 verbunden. Die Parallelschaltung S4, D4 und die Gleichrichterdiode D3 sind einerseits über die zweite Induktivität L2 mit dem Phasenleiter L des Versorgungsnetzes 22 und andererseits mit einem der Pole 14p, 14m des Gleichspannungszwischenkreises 14 verbunden. Die Gleichrichterdioden D1 und D4 parallel zu den schnellen PFC-Leistungsschaltern S2, S4 wirken als Schutzfunktion für die beiden PFC-Leistungsschalter vor falsch gepolter Spannung, insbesondere bei Zuschaltung an das Versorgungsnetz 22. So können die Gleichrichterdioden D1 und D4 auch als langsame Dioden ausgeführt sein, wie z.B. intrinsische Body Dioden, wenn die schnellen PFC-Leistungsschalter S2 und S4 z.B. als MOSFETs ausgebildet sind.

Im Übrigen entsprechen Aufbau und Funktionsweise der Antriebsschaltung 10 von Fig. 10 jenen der Antriebsschaltung 10 von Fig. 1, 7 bzw. 8.

Das Beispiel von Fig. 10 kann auch mit dem Beispiel von Fig. 9 kombiniert werden, d.h. um Gleichrichterdioden S13 bis S16 mit zum Teil parallel geschalteten weiteren Leistungsschaltern ergänzt werden.

Wie erläutert, wird gemäß der Erfindung eine Antriebsschaltung für einen Motor bzw. ein Motorumrichter für Festanschluss oder CEE Stecker mit einer für Fehlerstromschutzschalter des Typs A verträglichen Topologie vorgeschlagen. Die PFC-Schaltung der Antriebsschaltung ist insbesondere als Totem Pole Topologie mit schnellen Leistungsschaltern in Form von IGBTs ausgeführt. Es handelt sich um eine für Fehlerstromschutzschalter des Typs A kompatible Umrichtertopologie, die es ermöglicht, auf den Einbau eines Fehlerstromschutzschalters des Typs B zu verzichten. Die Kombination einer PFC-Schaltung mit Totem Pole - Topologie mit einem Motorumrichter ist eine kostengünstige und hoch effiziente Topologie, die Nachrüstkosten für einen Fehlerstromschutzschalter des Typs B beim Anschluss von Geräten mit aktiver PFC einspart.

Fig. 14 zeigt eine erfindungsgemäße Variante der Antriebsschaltung von Fig. 1.

Die in Fig. 14 dargestellte Antriebsschaltung 10 unterscheidet sich von jener des ersten Beispiels von Fig. 1 durch eine zusätzliche Umpolschaltung 28 zwischen dem Wechselstromanschluss 20 und der PFC-Schaltung 18. Die Umpolschaltung 28 enthält einen Schalter S17 zwischen der Phasenleitung L' der PFC-Schaltung 18 und einem ersten (in Fig. 14 oberen) Anschluss des Wechselstromanschlusses 20, einen Schalter S18 zwischen der Phasenleitung L' der PFC-Schaltung 18 und einem zweiten (in Fig. 14 unteren) Anschluss des Wechselstromanschlusses 20, einen Schalter S19 zwischen der Neutralleitung N` der PFC-Schaltung 18 und dem ersten Anschluss des Wechselstromanschlusses 20 und einen Schalter S20 zwischen der Neutralleitung N` der PFC-Schaltung 18 und dem zweiten Anschluss des Wechselstromanschlusses 20.

Falls das Versorgungsnetz 22 umgekehrt an den Wechselstromanschluss 20 der Antriebsschaltung 10 angeschlossen wird, d.h. falls die Phasenleitung L' der PFC-Schaltung 18 nicht mit dem Phasenleiter L sondern mit dem Neutralleiter N des Versorgungsnetzes 22 verbunden wird und die Neutralleitung N` der PFC-Schaltung 18 nicht mit dem Neutralleiter N sondern mit dem Phasenleiter L des Versorgungsnetzes 22 verbunden wird, würden bei der Ausführungsform von Fig. 1 die beiden Pole 14p, 14m des Gleichspannungszwischenkreises 14 nicht mehr auf den Neutralleiter N sondern auf den Phasenleiter L des Versorgungsnetzes 22 geklemmt werden. Hierdurch könnte im Fall eines Isolationsfehlers R1a, R1b gegebenenfalls ein Fehlerstrom entstehen, der die korrekte Auslösecharakteristik eines Fehlerstromschutzschalters des Typs A blockieren könnte.

Um dies zu verhindern, wird bei der Antriebsschaltung 10 von Fig. 14 durch die Steuereinrichtung 26 mittels einer Messschaltung zunächst eine Polung der an den Wechselstromanschluss 20 angeschlossenen Leiter L, N des Versorgungsnetzes 22 überprüft bzw. werden deren Anschlusspositionen in Bezug auf die Zwischenkreisspannung U_{+HV} ermittelt. Je nach Anschlussposition des Neutralleiters N kann dann entweder das erste steuerbare Schalterpaar S17 und S20 oder das zweite steuerbare Schalterpaar S18 und S19 eingeschaltet werden, sodass der Neutralleiter N des Versorgungsnetzes 22 mit der Neutralleitung N` der PFC-Schaltung 18 und der Phasenleiter L des Versorgungsnetzes 22 mit der Phasenleitung L' der PFC-Schaltung 18 verbunden werden.

Für die Schalter S17 bis S20 der Umpolschaltung 28 werden vorzugsweise Wechselrelais verwendet, sodass während des Einschaltvorgangs, wenn die Antriebsschaltung 10 an die Netzspannung U_{LN} gelegt wird, initial die Schalter S17 und S20 leiten. Werden anschließend über die Messschaltung vertauschte Phasen festgestellt, werden vor Aktivierung der PFC-Schaltung 18 die Wechselrelais S17-20 umgeschaltet, sodass die Schalter S18 und S19 leiten. Mittels der Kapazität des Zwischenkreiskondensators C1 des Gleichspannungszwischenkreises 14 kann die kurze Zeit dieses Umschaltvorgangs, in welchem die Antriebsschaltung 10 keine Versorgungsspannung sieht, überbrückt werden. Solange die PFC-Schaltung 18 nicht aktiviert ist und die Zwischenkreisspannung U_{+HV} nicht hochgesetzt wird, kann auch kein kritischer Zustand mit einem Fehlergleichstrom entstehen.

Im Übrigen entsprechen Aufbau und Funktionsweise der erfindungsgemäßen Antriebsschaltung 10 von Fig. 14 jenen der Antriebsschaltung 10 von Fig. 1.

Fig. 15 zeigt eine andere, nicht in den Schutzumfang fallende Variante der Antriebsschaltung von Fig. 1

Die in Fig. 15 dargestellte Antriebsschaltung 10 unterscheidet sich von jener des ersten Beispiels von Fig. 1 durch die Konfiguration des Gleichspannungszwischenkreises 14. Der Gleichspannungszwischenkreis 14 hat zusätzlich zu dem Zwischenkreiskondensator C1 einen auf der Seite seines Pluspols 14p in Reihe zu ihm geschalteten Stromshunt R2a und/oder einen auf der Seite seines Minuspols 14m in Reihe zu ihm geschalteten Stromshunt R2b. Die Stromshunts R2a, R2b dienen als Überstromerkennungssensoren.

Sowohl im Wechselrichter 16 mit den Leistungsschaltern S7 bis S12 als auch in der PFC-Schaltung 18 mit den Schaltern S1 bis S6 kann beispielsweise durch ein Fehlverhalten eines H-Brücken-Treibers ein Kurzschluss über den High-Side-Schalter und den Low-Side Schalter einer H-Brücke entstehen. Der dabei sehr große kurzzeitig entstehende Kurzschlussstrom wird durch den Zwischenkreiskondensator C1 bereitgestellt. Um die Leistungsschalter zu schützen, müssen innerhalb möglichst kurzer Zeit sowohl die High-Side-Schalter als auch die Low-Side-Schalter abgeschaltet werden. Durch die über den Stromshunts R2a, R2b des Gleichspannungszwischenkreises 14 abfallende Spannung kann ein Kurzschluss in den Schaltern S1-S6, S7-S12 sowohl der PFC-Schaltung 18 als auch des Wechselrichters 16 erkannt werden. Beim Erkennen des Vorhandenseins irgendeines solchen Kurzschlusses werden die PFC-Schaltung 18 und der Wechselrichter 16 von der Steuereinrichtung 16 abgeschaltet. Zum Abschalten werden alle Schalter ausgeschaltet / geöffnet.

Im Übrigen entsprechen Aufbau und Funktionsweise der Antriebsschaltung 10 von Fig. 15 jenen der Antriebsschaltung 10 von Fig. 1.

Die in Fig. 14 dargestellte Ausführungsform kann mit dem in Fig. 15 dargestellten Beispiel kombiniert werden. D.h. die Antriebsschaltung von Fig. 14 kann mit einer Kurzschlusserkennung gemäß Fig. 15 versehen werden. Außerdem kann die in Fig. 14 dargestellte Ausführungsform auch mit Merkmalen der anderen Beispiele der Antriebsschaltung kombiniert werden. D.h. die Antriebsschaltungen 10 von Fig. 7 bis 10 können ebenfalls erfindungsgemäß mit einer Umpolschaltung 28 gemäß Fig. 14 und den unabhängen Ansprüchen ergänzt werden und darüber hinaus auch mit einer Kurzschlusserkennung gemäß Fig. 15 ergänzt werden.

### BEZUGSZIFFERNLISTE

- 10: Antriebsschaltung
- 12: Motor
- 14: Gleichspannungszwischenkreis
- 14m: Minuspol von 14
- 14p: Pluspol von 14
- 16: Wechselrichter
- 17: Motorphasenanschluss
- 20: Wechselstromanschluss
- 22: Versorgungsnetz
- 18: Leistungsfaktorkorrektur (PFC) - Schaltung
- 26: Steuereinrichtung
- 24: Treiberschaltung
- 28: Umpolschaltung

- C1: Zwischenkreiskondensator von 14
- D1 - D4: (schnelle) Gleichtrichterdioden von 18
- D5 - D6: weitere Gleichrichterdioden von 18
- D13 - D16: (schnelle) Gleichrichterdioden von 18
- L1, L2: Induktivitäten von 18
- L3, L4: weitere Induktivitäten von 18
- S1 - S4: (schnelle PFC-) Leistungsschalter von 18
- S5 - S6: Zusatzschalter von 18
- S7 - S12: Leistungsschalter von 16
- S13 - S16: weitere (schnelle PFC-) Leistungsschalter von 18
- S17 - S20: Schalter von 28
- R1a..d: Isolationsfehler-Widerstände
- R2a..b: Überstromerkennungssensor in 14
- SP: Sternpunkt von 12
- U, V, W: Phasen von 12, 16
- L, N: Phasenleiter und Neutralleiter von 22
- L`, N`: Phasenleitung und Neutralleitung von 18
- PE: Schutzerdung

- SA: Steuersignal an Treiberschaltung 24
- Suvw: Steuersignal an Wechselrichter 16

- Imotor: Motorstrom
- IR1a..d: Isolationsfehlerstrom

- ULN: Netzspannung
- U+HV: Zwischenkreisspannung

## Patentansprüche

1. Verfahren zum Betreiben einer Antriebsschaltung (10) zum Antreiben eines elektronisch kommutierten Motors (12), wobei
die Antriebsschaltung (10) eine Leistungsfaktorkorrekturschaltung (18) zur Speisung eines Gleichspannungszwischenkreises (14) mit sinusförmigen Strömen aus einem an ein Versorgungsnetz (22) anschließbaren Wechselstromanschluss (20) aufweist, wobei das Versorgungsnetz (22) die Antriebsschaltung (10) mit einer positiven Netzhalbwelle und einer negativen Netzhalbwelle speist,
der Gleichspannungszwischenkreis (14) den Motor (12) über einen Wechselrichter (16) mit mehrphasigen Brückenschaltungen (S7-S12) speist, und die Antriebsschaltung ferner eine Steuereinrichtung (26) zum Ansteuern der Leistungsschalter (S7-S12) des Wechselrichters (16) und der Schalter (S1-S6, S13-S16) der Leistungsfaktorkorrekturschaltung (18) aufweist, welche die Schalter (S1-S6, S13-S16) der Leistungsfaktorkorrekturschaltung (18) so ansteuert, dass
die beiden Pole (14m, 14p) des Gleichspannungszwischenkreises (14) über die Leistungsfaktorkorrekturschaltung (18) alternierend mit einem Neutralleiter (N) des Versorgungsnetzes (22) verbunden werden,
**dadurch gekennzeichnet, dass**
die Antriebsschaltung (10) ferner eine Umpolschaltung (28) zwischen dem Wechselstromanschluss (20) und der Leistungsfaktorkorrekturschaltung (18) aufweist, welche Schalter (S17-S20) zum wahlweisen Verbinden einer Phasenleitung (L`) und einer Neutralleitung (N') der Leistungsfaktorkorrekturschaltung (18) mit den beiden Polen des Wechselstromanschlusses (20) enthält und mittels der Steuereinrichtung eine Polung der an den Wechselstromanschluss (20) angeschlossenen Leiter (L, N) des Versorgungsnetzes (22) überprüft wird und dann mittels Ansteuern der Umpolschaltung eine Phasenleitung (L`)
der Leistungsfaktorkorrekturschaltung (18) mit dem mit dem Phasenleiter (L) des Versorgungsnetzes (22) verbundenen Pol des Wechselstromanschlusses (20) und eine Neutralleitung (N') der Leistungsfaktorkorrekturschaltung (18) mit dem mit dem Neutralleiter (N) des Versorgungsnetzes (22) verbundenen Pol des Wechselstromanschlusses (20) verbunden werden; und
die Frequenz zur alternierenden Verbindung der beiden Pole (14m, 14p) des Gleichspannungszwischenkreises (14) mit dem Neutralleiter (N) des Versorgungsnetzes (22) der Netzfrequenz der Netzspannung (ULN) des Versorgungsnetzes (22) entspricht, wobei in der positiven Netzhalbwelle im Wesentlichen nur die mit dem Minuspol (14m) des Gleichspannungszwischenkreises (14) verbundenen Leistungsschalter (S2, S3, S13, S14) der Leistungsfaktorkorrekturschaltung (18) getaktet werden und in der negativen Netzhalbwelle im Wesentlichen nur die mit dem Pluspol (14p) des Gleichspannungszwischenkreises (14) verbundenen Leistungsschalter (S1, S4, S15, S16) der Leistungsfaktorkorrekturschaltung (18) getaktet werden.

2. Verfahren nach Anspruch 1 , **dadurch gekennzeichnet, dass** die Verbindung der beiden Pole (14m, 14p) des Gleichspannungszwischenkreises (14) mit dem Neutralleiter (N) des Versorgungsnetzes (22) über Gleichrichterdioden (D5, D6) mit entsprechender Stromflussrichtung erfolgt.

3. Verfahren nach Anspruch 2, **dadurch gekennzeichnet, dass** parallel zu den Gleichrichterdioden (D5, D6) Zusatzschalter (S5, S6) geschaltet sind und diese Zusatzschalter (S5, S6) alternierend geschlossen werden, um die Flussspannung der Verbindungsstelle zwischen dem Neutralleiter (N) des Versorgungsnetzes (22) und dem jeweiligen Pol (14m, 14p) des Gleichspannungszwischenkreises (14) zu reduzieren.

4. Verfahren nach Anspruch 1 , **dadurch gekennzeichnet, dass** die Verbindung der beiden Pole (14m, 14p) des Gleichspannungszwischenkreises (14) mit dem Neutralleiter (N) des Versorgungsnetzes (22) über Zusatzschalter (S5, S6) erfolgt und diese Zusatzschalter (S5, S6) alternierend geschlossen werden, um die Flussspannung der Verbindungsstelle zwischen dem Neutralleiter (N) des Versorgungsnetzes (22) und dem jeweiligen Pol (14m, 14p) des Gleichspannungszwischenkreises (14) zu reduzieren.

5. Verfahren nach einem der vorhergehenden Ansprüche, **dadurch gekennzeichnet, dass** der Gleichspannungszwischenkreis (14) einen Zwischenkreiskondensator (C1) und wenigstens einen in Reihe zu dem Zwischenkreiskondensator (C1) geschalteten Überstromerkennungssensor (R2a, R2b) aufweist; und die Leistungsfaktorkorrekturschaltung (18) und der Wechselrichter (16) abgeschaltet werden, falls anhand eines durch den wenigstens einen Überstromerkennungssensor (R2a, R2b) erkannten Überstroms im Gleichspannungszwischenkreis (14) auf ein Vorhandensein eines Kurzschlusses eines Schalters (S1-S6, S13-S16) der Leistungsfaktorkorrekturschaltung (18) und/oder eines Leistungsschalters (S7-S12) des Wechselrichters (16) geschlossen wird.

6. Verfahren nach einem der vorhergehenden Ansprüche, **dadurch gekennzeichnet, dass** durch einen FI-Schutzschalter des Typs A, der zwischen das Versorgungsnetz (22) und den Wechselstromanschluss (20) der Antriebsschaltung (10) geschaltet ist, Isolationsfehler an dem Pluspol (14p) des Gleichspannungszwischenkreises (14), dem Minuspol (14m) des Gleichspannungszwischenkreises (14), einer Motorphase (U, V, W) des Motors (12) oder einem Sternpunkt (SP) des Motors (12) erkannt werden und die Antriebsschaltung (10) bei Bedarf vom Versorgungsnetz (22) getrennt wird.

7. Antriebsschaltung (10) zum Antreiben eines elektronisch kommutierten Motors (12), aufweisend:
einen Gleichspannungszwischenkreis (14);
einen mit dem Gleichspannungszwischenkreis (14) verbundenen Wechselrichter (16) mit mehrphasigen Brückenschaltungen (S7-S12) zum Speisen des Motors (12);
eine Leistungsfaktorkorrekturschaltung (18) zur Speisung des Gleichspannungszwischenkreises (14) mit sinusförmigen Strömen aus einem an ein Versorgungsnetz (22) anschließbaren Wechselstromanschluss (20) der Antriebsschaltung (10), wobei die Antriebsschaltung (10) dazu eingerichtet ist, vom Versorgungsnetz (22) mit einer positiven Netzhalbwelle und einer negativen Netzhalbwelle gespeist zu werden; und
eine Steuereinrichtung (26) zum Ansteuern der Leistungsschalter (S7-S12) des Wechselrichters (16) und der Schalter (S1-S6, S13-S16) der Leistungsfaktorkorrekturschaltung (18), wobei die Steuereinrichtung (26) ausgestaltet ist, um die Schalter (S1-S6, S13-S16) der Leistungsfaktorkorrekturschaltung (18) so anzusteuern, dass die beiden Pole (14m, 14p) des Gleichspannungszwischenkreises (14) über den Wechselstromanschluss (20) alternierend mit einem Neutralleiter (N) des Versorgungsnetzes (22) verbunden werden,
**dadurch gekennzeichnet, dass**
die Antriebsschaltung (10) ferner eine Umpolschaltung (28) zwischen dem Wechselstromanschluss (20) und der Leistungsfaktorkorrekturschaltung (18) aufweist, welche Schalter (S17-S20) zum wahlweisen Verbinden einer Phasenleitung (L`) und einer Neutralleitung (N') der Leistungsfaktorkorrekturschaltung (18) mit den beiden Polen des Wechselstromanschlusses (20) enthält;
die Steuereinrichtung (26) konfiguriert ist, um eine Polung der an den Wechselstromanschluss (20) angeschlossenen Leiter (L, N) des Versorgungsnetzes (22) zu überprüfen und dann die Umpolschaltung (28) so anzusteuern, dass die Phasenleitung (L`) der Leistungsfaktorkorrekturschaltung (18) mit dem mit dem Phasenleiter (L) des Versorgungsnetzes (22) verbundenen Pol des Wechselstromanschlusses (20) und die Neutralleitung (N') der Leistungsfaktorkorrekturschaltung (18) mit dem mit dem Neutralleiter (N) des Versorgungsnetzes (22) verbundenen Pol des Wechselstromanschlusses (20) verbunden werden; und
die Steuereinrichtung (26) konfiguriert ist, um die Schalter der Leistungsfaktorkorrekturschaltung (18) so anzusteuern, dass die Frequenz zur alternierenden Verbindung der beiden Pole (14m, 14p) des Gleichspannungszwischenkreises (14) mit dem Neutralleiter (N) des Versorgungsnetzes (22) der Netzfrequenz der Netzspannung (ULN) des Versorgungsnetzes (22) entspricht, wobei in der positiven Netzhalbwelle im Wesentlichen nur die mit dem Minuspol (14m) des Gleichspannungszwischenkreises (14) verbundenen Leistungsschalter (S2, S3, S13, S14) der Leistungsfaktorkorrekturschaltung (18) getaktet werden und in der negativen Netzhalbwelle im Wesentlichen nur die mit dem Pluspol (14p) des Gleichspannungszwischenkreises (14) verbundenen Leistungsschalter (S1, S4, S15, S16) der Leistungsfaktorkorrekturschaltung (18) getaktet werden.

8. Antriebsschaltung nach Anspruch 7, **dadurch gekennzeichnet, dass** die Leistungsfaktorkorrekturschaltung (18) Gleichrichterdioden (D1-D4, D13-D16) aufweist, die einerseits mit einem der beiden Pole (14m, 14p) des Gleichspannungszwischenkreises (14) und andererseits mit dem mit dem Phasenleiter (L) des Versorgungsnetzes (22) verbundenen Pol des Wechselstromanschlusses (20) verbunden sind; die Schalter (S1-S6, S13-S16) der Leistungsfaktorkorrekturschaltung (18) parallel zu den Gleichrichterdioden (D1-D4, D13-D16) geschaltete Leistungsschalter (S1-S4, S13-S16) aufweisen; und die Steuereinrichtung (26) ausgestaltet ist, um diese Leistungsschalter (S1-S4, S13-S16) der Leistungsfaktorkorrekturschaltung (18) schnell zu takten, vorzugsweise mit einer Frequenz weit oberhalb der Netzfrequenz der Netzspannung (U_{LN}) des Versorgungsnetzes (22).

9. Antriebsschaltung nach Anspruch 7 oder 8, **dadurch gekennzeichnet, dass** die Leistungsschalter (S1-S4, S13-S16) der Leistungsfaktorkorrekturschaltung (18) schnell schaltende IGBTs sind.

10. Antriebsschaltung nach Anspruch 9, **dadurch gekennzeichnet, dass** die Gleichrichterdioden (D1-D4, D13-D16) der Leistungsfaktorkorrekturschaltung (18) schnell sperrende Gleichrichterdioden, vorzugsweise diskrete Silizium- oder Siliziumcarbid-Halbleiter sind.

11. Antriebsschaltung nach einem der Ansprüche 7 bis 10, **dadurch gekennzeichnet, dass** die Leistungsfaktorkorrekturschaltung (18) Zusatzschalter (S5, S6) und/oder weitere Gleichrichterdioden (D5, D6) parallel zu den Zusatzschaltern (S5, S6) aufweist, die einerseits mit einem der beiden Pole (14m, 14p) des Gleichspannungszwischenkreises (14) und andererseits mit dem mit dem Neutralleiter (N) des Versorgungsnetzes (22) verbundenen Pol des Wechselstromanschlusses (20) verbunden sind; und die Steuereinrichtung (26) ausgestaltet ist, um diese Zusatzschalter (S5-S6) der Leistungsfaktorkorrekturschaltung (18) langsam mit jeder Halbwelle der Netzspannung (U_{LN}) des Versorgungsnetzes (22) zu takten.

12. Antriebsschaltung nach Anspruch 11, **dadurch gekennzeichnet, dass** die Zusatzschalter (S5, S6) der Leistungsfaktorkorrekturschaltung (18) MOSFETs sind und die weiteren Gleichrichterdioden (D5, D6) der Leistungsfaktorkorrekturschaltung (18) intrinsische Body Dioden der MOSFETs sind.

13. Antriebsschaltung nach einem der Ansprüche 7 bis 12, **dadurch gekennzeichnet, dass** der Gleichspannungszwischenkreis (14) einen Zwischenkreiskondensator (C1) und wenigstens einen in Reihe zu dem Zwischenkreiskondensator (C1) geschalteten Überstromerkennungssensor (R2a, R2b) aufweist; und die Steuereinrichtung (28) ausgestaltet ist, um die Leistungsfaktorkorrekturschaltung (18) und den Wechselrichter (16) abzuschalten, falls anhand eines durch den wenigstens einen Überstromerkennungssensor (R2a, R2b) erkannten Überstroms im Gleichspannungszwischenkreis (14) auf ein Vorhandensein eines Kurzschlusses eines Schalters (S1-S6, S13-S16) der Leistungsfaktorkorrekturschaltung (18) und/oder eines Leistungsschalters (S7-S12) des Wechselrichters (16) geschlossen wird.

14. Antriebsschaltung nach einem der Ansprüche 7 bis 13, **dadurch gekennzeichnet, dass** zwischen das Versorgungsnetz (22) und den Wechselstromanschluss (20) der Antriebsschaltung (10) ein FI-Schutzschalter des Typs A zum Erkennen von Isolationsfehlern an dem Pluspol (14p) des Gleichspannungszwischenkreises (14), dem Minuspol (14m) des Gleichspannungszwischenkreises (14), einer Motorphase (U,V,W) des Motors (12) oder einem Sternpunkt (SP) des Motors (12) geschaltet ist, und der dazu eingerichtet ist, die Antriebsschaltung (10) bei Bedarf vom Versorgungsnetz (22) zu trennen.

## Claims

1. Method for operating a drive circuit (10) for driving an electronically commutated motor (12), wherein the drive circuit (10) has a power factor correction circuit (18) for feeding sinusoidal currents to a DC link (14) from an AC terminal (20) which is connectable to a power supply grid (22), wherein the power supply grid (22) feeds the drive circuit (10) with a positive grid half-cycle and a negative grid half-cycle, the DC link (14) feeds the motor (12) via an inverter (16) having polyphase bridge circuits (S7-S12), and the drive circuit also has a control device (26) for controlling the power switches (S7-S12) of the inverter (16) and the switches (S1-S6, S13-S16) of the power factor correction circuit (18), which control device controls the switches (S1-S6, S13-S16) of the power factor correction circuit (18) in such a way that the two poles (14m, 14p) of the DC link (14) are connected alternately to a neutral conductor (N) of the power supply grid (22) via the power factor correction circuit (18),
**characterized in that**
the drive circuit (10) also has a polarity reversal circuit (28) between the AC terminal (20) and the power factor correction circuit (18), which polarity reversal circuit contains switches (S17-S20) for selectively connecting a phase line (L') and a neutral line (N') of the power factor correction circuit (18) to the two poles of the AC terminal (20), and a polarity of the conductors (L, N) of the power supply grid (22) which are connected to the AC terminal (20) is checked by means of the control device, and then, by way of controlling the polarity reversal circuit, a phase line (L') of the power factor correction circuit (18) is connected to that pole of the AC terminal (20) which is connected to the phase conductor (L) of the power supply grid (22), and a neutral line (N') of the power factor correction circuit (18) is connected to that pole of the AC terminal (20) which is connected to the neutral conductor (N) of the power supply grid (22); and
the frequency for the alternating connection of the two poles (14m, 14p) of the DC link (14) to the neutral conductor (N) of the power supply grid (22) corresponds to the line frequency of the line voltage (U_{LN}) of the power supply grid (22), wherein, in the positive grid half-cycle, substantially only those power switches (S2, S3, S13, S14) of the power factor correction circuit (18) which are connected to the negative pole (14m) of the DC link (14) are clocked, and in the negative grid half-cycle, substantially only those power switches (S1, S4, S15, S16) of the power factor correction circuit (18) which are connected to the positive pole (14p) of the DC link (14) are clocked.

2. Method according to Claim 1, **characterized in that** the connection of the two poles (14m, 14p) of the DC link (14) to the neutral conductor (N) of the power supply grid (22) takes place via rectifier diodes (D5, D6) with a corresponding direction of current flow.

3. Method according to Claim 2, **characterized in that** additional switches (S5, S6) are connected in parallel with the rectifier diodes (D5, D6), and these additional switches (S5, S6) are closed alternately in order to reduce the forward voltage of the connection point between the neutral conductor (N) of the power supply grid (22) and the respective pole (14m, 14p) of the DC link (14).

4. Method according to Claim 1, **characterized in that** the connection of the two poles (14m, 14p) of the DC link (14) to the neutral conductor (N) of the power supply grid (22) takes place via additional switches (S5, S6), and these additional switches (S5, S6) are closed alternately in order to reduce the forward voltage of the connection point between the neutral conductor (N) of the power supply grid (22) and the respective pole (14m, 14p) of the DC link (14).

5. Method according to one of the preceding claims, **characterized in that** the DC link (14) has a DC-link capacitor (C1) and at least one overcurrent identification sensor (R2a, R2b), which is connected in series with the DC-link capacitor (C1); and the power factor correction circuit (18) and the inverter (16) are switched off if, on the basis of an overcurrent in the DC link (14) identified by the at least one overcurrent identification sensor (R2a, R2b), it is concluded that there is a short circuit of a switch (S1-S6, S13-S16) of the power factor correction circuit (18) and/or of a power switch (S7-S12) of the inverter (16).

6. Method according to one of the preceding claims, **characterized in that** insulation faults at the positive pole (14p) of the DC link (14), the negative pole (14m) of the DC link (14), a motor phase (U, V, W) of the motor (12) or a neutral point (SP) of the motor (12) are identified, and the drive circuit (10) is isolated from the power supply grid (22) if required, by a Type A residual-current circuit breaker that is connected between the power supply grid (22) and the AC terminal (20) of the drive circuit (10).

7. Drive circuit (10) for driving an electronically commutated motor (12), having:
a DC link (14);
an inverter (16), which is connected to the DC link (14) and has polyphase bridge circuits (S7-S12) for feeding the motor (12);
a power factor correction circuit (18) for feeding sinusoidal currents to the DC link (14) from an AC terminal (20), which is connectable to a power supply grid (22), of the drive circuit (10), wherein the drive circuit (10) is designed to be fed with a positive grid half-cycle and a negative grid half-cycle by the power supply grid (22); and
a control device (26) for controlling the power switches (S7-S12) of the inverter (16) and the switches (S1-S6, S13-S16) of the power factor correction circuit (18), wherein the control device (26) is configured to control the switches (S1-S6, S13-S16) of the power factor correction circuit (18) in such a way that the two poles (14m, 14p) of the DC link (14) are connected alternately to a neutral conductor (N) of the power supply grid (22) via the AC terminal (20),
**characterized in that**
the drive circuit (10) also has a polarity reversal circuit (28) between the AC terminal (20) and the power factor correction circuit (18), which polarity reversal circuit contains switches (S17-S20) for selectively connecting a phase line (L') and a neutral line (N') of the power factor correction circuit (18) to the two poles of the AC terminal (20) ;
the control device (26) is configured to check a polarity of the conductors (L, N) of the power supply grid (22) which are connected to the AC terminal (20), and then to control the polarity reversal circuit (28) in such a way that the phase line (L') of the power factor correction circuit (18) is connected to that pole of the AC terminal (20) which is connected to the phase conductor (L) of the power supply grid (22), and the neutral line (N') of the power factor correction circuit (18) is connected to that pole of the AC terminal (20) which is connected to the neutral conductor (N) of the power supply grid (22); and the control device (26) is configured to control the switches of the power factor correction circuit (18) in such a way that the frequency for the alternating connection of the two poles (14m, 14p) of the DC link (14) to the neutral conductor (N) of the power supply grid (22) corresponds to the line frequency of the line voltage (U_{LN}) of the power supply grid (22), wherein in the positive grid half-cycle, substantially only those power switches (S2, S3, S13, S14) of the power factor correction circuit (18) which are connected to the negative pole (14m) of the DC link (14) are clocked, and in the negative grid half-cycle, substantially only those power switches (S1, S4, S15, S16) of the power factor correction circuit (18) which are connected to the positive pole (14p) of the DC link (14) are clocked.

8. Drive circuit according to Claim 7, **characterized in that** the power factor correction circuit (18) has rectifier diodes (D1-D4, D13-D16), which are connected on one side to one of the two poles (14m, 14p) of the DC link (14) and on the other side to that pole of the AC terminal (20) which is connected to the phase conductor (L) of the power supply grid (22); the switches (S1-S6, S13-S16) of the power factor correction circuit (18) have power switches (S1-S4, S13-S16) which are connected in parallel with the rectifier diodes (D1-D4, D13-D16); and the control device (26) is configured to clock these power switches (S1-S4, S13-S16) of the power factor correction circuit (18) quickly, preferably with a frequency far above the line frequency of the line voltage (U_{LN}) of the power supply grid (22).

9. Drive circuit according to Claim 7 or 8, **characterized in that** the power switches (S1-S4, S13-S16) of the power factor correction circuit (18) are high-speed IGBTs.

10. Drive circuit according to Claim 9, **characterized in that** the rectifier diodes (D1-D4, D13-D16) of the power factor correction circuit (18) are quick turn-off rectifier diodes, preferably discrete silicon or silicon carbide semiconductors.

11. Drive circuit according to one of Claims 7 to 10, **characterized in that** the power factor correction circuit (18) has additional switches (S5, S6) and/or further rectifier diodes (D5, D6) in parallel with the additional switches (S5, S6), which are connected on one side to one of the two poles (14m, 14p) of the DC link (14) and on the other side to that pole of the AC terminal (20) which is connected to the neutral conductor (N) of the power supply grid (22); and the control device (26) is configured to clock these additional switches (S5-S6) of the power factor correction circuit (18) slowly with each half-cycle of the line voltage (U_{LN}) of the power supply grid (22).

12. Drive circuit according to Claim 11, **characterized in that** the additional switches (S5, S6) of the power factor correction circuit (18) are MOSFETs, and the further rectifier diodes (D5, D6) of the power factor correction circuit (18) are intrinsic body diodes of the MOSFETs.

13. Drive circuit according to one of Claims 7 to 12, **characterized in that** the DC link (14) has a DC-link capacitor (C1) and at least one overcurrent identification sensor (R2a, R2b), which is connected in series with the DC-link capacitor (C1); and the control device (28) is configured to switch off the power factor correction circuit (18) and the inverter (16) if, on the basis of an overcurrent in the DC link (14) identified by the at least one overcurrent identification sensor (R2a, R2b), it is concluded that there is a short circuit of a switch (S1-S6, S13-S16) of the power factor correction circuit (18) and/or of a power switch (S7-S12) of the inverter (16).

14. Drive circuit according to one of Claims 7 to 13, **characterized in that** a Type A residual-current circuit breaker is connected between the power supply grid (22) and the AC terminal (20) of the drive circuit (10) to identify insulation faults at the positive pole (14p) of the DC link (14), the negative pole (14m) of the DC link (14), a motor phase (U, V, W) of the motor (12) or a neutral point (SP) of the motor (12), and is designed to isolate the drive circuit (10) from the power supply grid (22) if required.

## Revendications

1. Procédé pour faire fonctionner un circuit d'attaque (10) destiné à l'attaque d'un moteur à commutation électronique (12), le circuit d'attaque (10) possédant un circuit de correction du facteur de puissance (18) servant à l'alimentation d'un circuit intermédiaire à tension continue (14) avec des courants sinusoïdaux à partir d'une borne pour courant alternatif (20) pouvant être raccordée à un réseau d'alimentation (22), le réseau d'alimentation (22) alimentant le circuit d'attaque (10) avec une demi-onde de réseau positive et une demi-onde de réseau négative,
le circuit intermédiaire à tension continue (14) alimentant le moteur (12) par le biais d'un onduleur (16) avec des circuits en pont multiphasés (S7-S12) et
le circuit d'attaque possédant en outre un dispositif de commande (26) destiné à commander les commutateurs de puissance (S7-S12) de l'onduleur (16) et les commutateurs (S1-S6, S13-S16) du circuit de correction du facteur de puissance (18), lequel commande les commutateurs (S1-S6, S13-S16) du circuit de correction du facteur de puissance (18) de telle sorte que les deux pôles (14m, 14p) du circuit intermédiaire à tension continue (14) sont reliés en alternance à un conducteur de neutre (N) du réseau d'alimentation (22) par le biais du circuit de correction du facteur de puissance (18),
**caractérisé en ce que**
le circuit d'attaque (10) possède en outre un circuit d'inversion de polarité (28) entre la borne pour courant alternatif (20) et le circuit de correction du facteur de puissance (18), lequel comprend des commutateurs (S17-S20) servant à relier sélectivement une ligne de phase (L') et une ligne de neutre (N') du circuit de correction du facteur de puissance (18) aux deux pôles de la borne pour courant alternatif (20) et une polarité des conducteurs (L, N) du réseau d'alimentation (22) raccordés à la borne pour courant alternatif (20) est vérifiée au moyen du dispositif de commande et ensuite, par commande du circuit d'inversion de polarité, une ligne de phase (L') du circuit de correction du facteur de puissance (18) est reliée au pôle de la borne pour courant alternatif (20) qui est relié au conducteur de phase (L) du réseau d'alimentation (22) et une ligne de neutre (N') du circuit de correction du facteur de puissance (18) au pôle de la borne pour courant alternatif (20) qui est relié au conducteur de neutre (N) du réseau d'alimentation (22) ; et
la fréquence pour la liaison alternée des deux pôles (14m, 14p) du circuit intermédiaire à tension continue (14) au conducteur de neutre (N) du réseau d'alimentation (22) correspond à la fréquence de réseau de la tension de réseau (ULN) du réseau d'alimentation (22), dans la demi-onde de réseau positive, seuls les commutateurs de puissance (S2, S3, S13, S14) du circuit de correction du facteur de puissance (18) étant sensiblement cadencés avec le pôle moins (14m) du circuit intermédiaire à tension continue (14) et, dans la demi-onde de réseau négative, seuls les commutateurs de puissance (S1, S4, S15, S16) du circuit de correction du facteur de puissance (18) étant sensiblement cadencés avec le pôle plus (14p) du circuit intermédiaire à tension continue (14) .

2. Procédé selon la revendication 1, **caractérisé en ce que** la liaison des deux pôles (14m, 14p) du circuit intermédiaire à tension continue (14) avec le conducteur de neutre (N) du réseau d'alimentation (22) s'effectue par le biais de diodes de redressement (D5, D6) ayant un sens de passage du courant correspondant.

3. Procédé selon la revendication 2, **caractérisé en ce que** des commutateurs supplémentaires (S5, S6) sont branchés en parallèle avec les diodes de redressement (D5, D6) et ces commutateurs supplémentaires (S5, S6) sont fermés en alternance afin de réduire la tension de flux du point de liaison entre le conducteur de neutre (N) du réseau d'alimentation (22) et le pôle (14m, 14p) respectif du circuit intermédiaire à tension continue (14) .

4. Procédé selon la revendication 1, **caractérisé en ce que** la liaison des deux pôles (14m, 14p) du circuit intermédiaire à tension continue (14) avec le conducteur de neutre (N) du réseau d'alimentation (22) s'effectue par le biais de commutateurs supplémentaires (S5, S6) et ces commutateurs supplémentaires (S5, S6) sont fermés en alternance afin de réduire la tension de flux du point de liaison entre le conducteur de neutre (N) du réseau d'alimentation (22) et le pôle (14m, 14p) respectif du circuit intermédiaire à tension continue (14).

5. Procédé selon l'une des revendications précédentes, **caractérisé en ce que** le circuit intermédiaire à tension continue (14) possède un condensateur de circuit intermédiaire (C1) et au moins un détecteur de reconnaissance de surintensité (R2a, R2b) branché en série avec le condensateur de circuit intermédiaire (C1) ; et le circuit de correction du facteur de puissance (18) et l'onduleur (16) sont mis hors circuit dans le cas où une surintensité reconnue dans le circuit intermédiaire à tension continue (14) par l'au moins un détecteur de reconnaissance de surintensité (R2a, R2b) amène à conclure à la présence d'un court-circuit d'un commutateur (S1-S6, S13-S16) du circuit de correction du facteur de puissance (18) et/ou d'un commutateur de puissance (S7-S12) de l'onduleur (16).

6. Procédé selon l'une des revendications précédentes, **caractérisé en ce que** des défauts d'isolation au niveau du pôle plus (14p) du circuit intermédiaire à tension continue (14), du pôle moins (14m) du circuit intermédiaire à tension continue (14), d'une phase de moteur (U, V, W) du moteur (12) ou d'un point étoile (SP) du moteur (12) sont reconnus par un disjoncteur différentiel de type A, lequel est branché entre le réseau d'alimentation (22) et la borne pour courant alternatif (20) du circuit d'attaque (10), et le circuit d'attaque (10) est, au besoin, déconnecté du réseau d'alimentation (22).

7. Circuit d'attaque (10) destiné à l'attaque d'un moteur à commutation électronique (12), comprenant :
un circuit intermédiaire à tension continue (14) ;
un onduleur (16) relié au un circuit intermédiaire à tension continue (14) et comprenant des circuits en pont multiphasés (S7-S12) pour l'alimentation du moteur (12) ;
un circuit de correction du facteur de puissance (18) servant à l'alimentation du circuit intermédiaire à tension continue (14) avec des courants sinusoïdaux à partir d'une borne pour courant alternatif (20) du circuit d'attaque (10) pouvant être raccordée à un réseau d'alimentation (22), le circuit d'attaque (10) étant conçu pour être alimenté par le réseau d'alimentation (22) avec une demi-onde de réseau positive et une demi-onde de réseau négative ; et
un dispositif de commande (26) destiné à commander les commutateurs de puissance (S7-S12) de l'onduleur (16) et les commutateurs (S1-S6, S13-S16) du circuit de correction du facteur de puissance (18), le dispositif de commande (26) étant configuré pour commander les commutateurs (S1-S6, S13-S16) du circuit de correction du facteur de puissance (18) de telle sorte que les deux pôles (14m, 14p) du circuit intermédiaire à tension continue (14) sont reliés en alternance à un conducteur de neutre (N) du réseau d'alimentation (22) par le biais de la borne pour courant alternatif (20),
**caractérisé en ce que**
le circuit d'attaque (10) comprend en outre un circuit d'inversion de polarité (28) entre la borne pour courant alternatif (20) et le circuit de correction du facteur de puissance (18), lequel comprend des commutateurs (S17-S20) servant à relier sélectivement une ligne de phase (L') et une ligne de neutre (N') du circuit de correction du facteur de puissance (18) aux deux pôles de la borne pour courant alternatif (20) ;
le dispositif de commande (26) est configuré pour vérifier une polarité des conducteurs (L, N) du réseau d'alimentation (22) raccordés à la borne pour courant alternatif (20) et ensuite commander le circuit d'inversion de polarité (28) de telle sorte que la ligne de phase (L') du circuit de correction du facteur de puissance (18) est reliée au pôle de la borne pour courant alternatif (20) qui est relié au conducteur de phase (L) du réseau d'alimentation (22) et la ligne de neutre (N') du circuit de correction du facteur de puissance (18) au pôle de la borne pour courant alternatif (20) qui est relié au conducteur de neutre (N) du réseau d'alimentation (22) ; et
le dispositif de commande (26) est configuré pour commander le circuit de correction du facteur de puissance (18) de telle sorte que la fréquence pour la liaison alternée des deux pôles (14m, 14p) du circuit intermédiaire à tension continue (14) au conducteur de neutre (N) du réseau d'alimentation (22) correspond à la fréquence de réseau de la tension de réseau (ULN) du réseau d'alimentation (22), dans la demi-onde de réseau positive, seuls les commutateurs de puissance (S2, S3, S13, S14) du circuit de correction du facteur de puissance (18) étant sensiblement cadencés avec le pôle moins (14m) du circuit intermédiaire à tension continue (14) et, dans la demi-onde de réseau négative, seuls les commutateurs de puissance (S1, S4, S15, S16) du circuit de correction du facteur de puissance (18) étant sensiblement cadencés avec le pôle plus (14p) du circuit intermédiaire à tension continue (14).

8. Circuit d'attaque selon la revendication 7, **caractérisé en ce que** le circuit de correction du facteur de puissance (18) possède des diodes de redressement (D1-4, D13-D16) qui sont reliées d'une part à l'un des deux pôles (14m, 14p) du circuit intermédiaire à tension continue (14) et d'autre part au pôle de la borne pour courant alternatif (20) qui est relié au conducteur de phase (L) du réseau d'alimentation (22) ; les commutateurs (S1-S6, S13-S16) du circuit de correction du facteur de puissance (18) possèdent des commutateurs de puissance (S1-S4, S13-S6) branchés en parallèle avec les diodes de redressement (D1-4, D13-D16) ; et le dispositif de commande (26) est configuré pour cadencer rapidement des commutateurs de puissance (S1-S4, S13-S6) du circuit de correction du facteur de puissance (18), de préférence avec une fréquence nettement supérieure à la fréquence de réseau de la tension de réseau (U_{LN}) du réseau d'alimentation (22).

9. Circuit d'attaque selon la revendication 7 ou 8, **caractérisé en ce que** les commutateurs de puissance (S1-S4, S13-S6) du circuit de correction du facteur de puissance (18) sont des IGBT à commutation rapide.

10. Circuit d'attaque selon la revendication 9, **caractérisé en ce que** les diodes de redressement (D1-D4, D13-D16) du circuit de correction du facteur de puissance (18) sont des diodes de redressement à blocage raide, de préférence des semiconducteurs discrets au silicium ou au carbure de silicium.

11. Circuit d'attaque selon l'une des revendications 7 à 10, **caractérisé en ce que** le circuit de correction du facteur de puissance (18) possède des commutateurs supplémentaires (S5, S6) et/ou des diodes de redressement (D5, D6) supplémentaires en parallèle avec les commutateurs supplémentaires (S5, S6), qui sont reliés d'une part à l'un des deux pôles (14m, 14p) du circuit intermédiaire à tension continue (14) et d'autre part au pôle de la borne pour courant alternatif (20) qui est relié au conducteur de neutre (N) du réseau d'alimentation (22) ; et le dispositif de commande (26) est configuré pour cadencer ces commutateurs supplémentaires (S5-S6) du circuit de correction du facteur de puissance (18) lentement avec chaque demi-onde de la tension de réseau (U_{LN}) du réseau d'alimentation (22) .

12. Circuit d'attaque selon la revendication 11, **caractérisé en ce que** les commutateurs supplémentaires (S5, S6) du circuit de correction du facteur de puissance (18) sont des MOSFET et les diodes de redressement (D5, D6) supplémentaires du circuit de correction du facteur de puissance (18) sont des diodes des corps intrinsèques des MOSFET.

13. Circuit d'attaque selon l'une des revendications 7 à 12, **caractérisé en ce que** le circuit intermédiaire à tension continue (14) possède un condensateur de circuit intermédiaire (C1) et au moins un détecteur de reconnaissance de surintensité (R2a, R2b) branché en série avec le condensateur de circuit intermédiaire (C1) ; et le dispositif de commande (28) est configuré pour mettre le circuit de correction du facteur de puissance (18) et l'onduleur (16) hors circuit dans le cas où une surintensité reconnue dans le circuit intermédiaire à tension continue (14) par l'au moins un détecteur de reconnaissance de surintensité (R2a, R2b) amène à conclure à la présence d'un court-circuit d'un commutateur (S1-S6, S13-S16) du circuit de correction du facteur de puissance (18) et/ou d'un commutateur de puissance (S7-S12) de l'onduleur (16).

14. Circuit d'attaque selon l'une des revendications 7 à 13, **caractérisé en ce qu'**entre le réseau d'alimentation (22) et la borne pour courant alternatif (20) du circuit d'attaque (10) est branché un disjoncteur différentiel de type A qui est destiné à reconnaître des défauts d'isolation au niveau du pôle plus (14p) du circuit intermédiaire à tension continue (14), du pôle moins (14m) du circuit intermédiaire à tension continue (14), d'une phase de moteur (U, V, W) du moteur (12) ou d'un point étoile (SP) du moteur (12), et qui est conçu pour, au besoin, déconnecter le circuit d'attaque (10) du réseau d'alimentation (22).
